# EUROPÄISCHE PATENTSCHRIFT

(11) **EP 1 458 073 B1**
(45) Veröffentlichungstag und Bekanntmachung des Hinweises auf die Patenterteilung: **03.01.2007**
(21) Anmeldenummer: 04006018.8
(22) Anmeldetag: 12.03.2004
(51) Int. Cl.: H02B 1/30

(54) **Bausatz für Verteilerschränke**
Kit for distribution cabinet
Kit pour armoire de distribution

(30) Priorität: 12.03.2003 DE 10310778
(43) Veröffentlichungstag der Anmeldung: 15.09.2004
(73) Patentinhaber: ADC GMBH, 14167 Berlin (DE); Berthold Sichert GmbH, 12277 Berlin (DE)
(72) Erfinder: Irmer, Günter, 13055 Berlin (DE); Perschon, Helmut, 12277 Berlin (DE)

(56) Entgegenhaltungen:
- EP-A- 1 047 167
- WO-A-01/91529
- US-B1- 6 299 268

## Beschreibung

### I. Anwendungsgebiet

Die Erfindung betrifft einen Verteilerschrank, der in der Regel im Freien aufgestellt ist und die technischen, z. B. elektrischen oder optischen Verteilanlagen für z. B. Schwachstromsysteme, beispielsweise Telefonanlagen, mit zugehörigen Stromversorgungseinrichtungen und Kabelab-/-anschlusseinrichtungen für ein bestimmtes räumliches Gebiet aufnimmt.

### II. Technischer Hintergrund

Derartige Verteilerschränke müssen - neben einer ausreichenden baulichen Stabilität und einer ausreichenden IP-Sicherheit, also Dichtigkeit gegen Regen und Spritzwasser, sowie einer Widerstandsfähigkeit gegen Vandalismus etc. - heute weitere Forderungen erfüllen, beispielsweise dürfen keine zu starken elektromagnetischen Strahlungen an die Umgebung abgegeben werden, und für den Einsatz vor allem in wärmeren Ländern dürfen die Temperaturen im Inneren des Verteilerschrankes nicht zu hoch ansteigen trotz der dort untergebrachten, wärmeabgebenden elektrischen Baugruppen, aber auch nicht zu tief absinken.

Derartige Verteilerschränke werden grundsätzlich entweder aus Metall oder aus Kunststoff hergestellt, wobei Kunststoff den Vorteil einer billigeren Herstellbarkeit mit dem Vorteil eines elektrisch nicht leitenden Materials verbindet, so daß selbst bei außerplanmäßigen Kontaktierungen des Gehäuses des Verteilerschrankes durch ein elektrisches Bauelement nie die Gefahr besteht, daß bei Berühren des Gehäuses von außen die betreffende Person einen Stromschlag erhält.

Seit in Deutschland und auch in anderen Ländern das Monopol der staatlichen Telekommunikationsunternehmen aufgehoben ist, und unterschiedliche Betreiber von Netzen wie etwa Telekommunikationsnetzen vorhanden sind, besteht weiterhin das Problem für die Hersteller solcher Verteilerschränke darin, dass die verschiedenen Netzbetreiber unterschiedliche Anforderungen an diese Verteilerschränke zwingend vorgeben, beispielsweise hinsichtlich Abmessungen der Verteilerschränke, Beplankung des Innenkorpus, Befestigungsposition und Form des Montagerahmens im Inneren des Innenkorpus, Belüftungsmöglichkeit etc..

Für die Hersteller der Verteilerschränke ergibt sich daraus das Problem, dass eine sehr große unterschiedliche Anzahl von Varianten an Verteilerschränken entwickelt und bevorratet werden muss, was unter anderem den Lageraufwand sowie Aufwand für Formen und Vorrichtung drastisch erhöht.

Aus der Druckschrift EP 1 047 167 A1 sind ein Verteilerschrank sowie ein Bausatz zur Herstellung eines solchen Verteilerschranks bekannt, wobei der Verteilerschrank wenigstens teilweise aus Kunststoff besteht. Der Verteilerschrank, der für die Aufnahme von Schwachstromverteilanlagen vorgesehen ist, umfasst einen Sockelkasten, einen Schrankkorpus mit wenigstens einer Tür, einen Schrankdeckel sowie einen im Inneren angeordneten Montagerahmen.

Aus der Druckschrift US 6,299,268 B1 ist ein Rahmen für einen Elektroschrank bekannt. Der Rahmen umfasst zwei rechteckige Teilrahmen, die jeweils an den vier Ecken mittels horizontal verlaufender Träger verbunden sind, um einen Rahmen mit einem rechtwinkligen Parallelepipedprofil zu schaffen. Die Teilrahmen umfassen jeweils zwei aufrechte, parallel verlaufende Stützen sowie zwei parallel verlaufende Querelemente. Die Stützen und Querelemente sind in den Ecken jeweils über Verbindungsteile miteinander verbunden. Die Verbindungsteile weisen zwei rechtwinklig zueinander verlaufende Zapfen auf, die jeweils in das Querelement bzw. die aufrechte Stütze in deren Enden eingeführt sind. Die Träger sind ebenfalls an den Verbindungselementen angeschraubt, wobei profilierte Vorsprünge der Verbindungselemente in das Profil der Träger eingreifen.

### III. Darstellung der Erfindung a) Technische Aufgabe

Es ist daher die Aufgabe der vorliegenden Erfindung, ein Herstellverfahren für unterschiedlichste Varianten von Verteilerschränken sowie einen geeigneten Bausatz zur Durchführung dieses Verfahrens zur Verfügung zu stellen, mit deren Hilfe es möglich ist, mit einer relativ geringen Anzahl von Einzelteilen durch einfache 25 Zusatzmaßnahmen wie etwa Ablängen von Profilen auf die gewünschte Länge unterschiedliche Verteilerschränke herzustellen.

### b) Lösung der Aufgabe

Diese Aufgabe wird durch die Merkmale der Ansprüche 1, 2 und 53 gelöst. Vorteilhafte Ausführungsformen ergeben sich aus den jeweiligen Unteransprüchen.

Mittels des ersten Rahmenprofiles und der dazu passenden Würfelverbinder kann ein Korpusrahmen eines Innenkorpus erstellt werden, indem das erste Rahmenprofil in den gewünschten Einzelteilen auf Länge geschnitten mit den Würfelverbindem verbunden wird, wobei vorzugsweise Rahmenprofile entlang einiger und insbesondere aller Außenkanten des meist kubischen Korpusrahmens angeordnet werden. Jedoch ist auch die Anordnung rahmenförmiger Seitenteile möglich, die lediglich durch eine oder zwei Querstreben, beispielsweise im unteren Bereich, zu einem dann im oberen Bereich offenen Korpusrahmen verbunden werden.

Auf diese Art und Weise kann ein Korpusrahmen beliebiger Größe, entsprechend der gewünschten Endgröße des Korpus, hergestellt werden.

Indem der Bausatz auch wenigstens ein Befestigungsteil für eine Außenbeplankung des Korpusrahmens mit Schirmblechen (zum Zwecke der elektromagnetischen Abschirmung des Innenkorpus) umfaßt, insbesondere in Form eines in die Außenflächen der Rahmenprofile einsetzbaren, demontierbaren und/oder Einweg-Einsteckprofiles oder in Form von Haltestöpseln, kann die Außenbeplankung des Korpusrahmens und damit die Komplettierung des Innenkorpus sehr leicht und schnell fertiggestellt werden. Eine zweite kombinierte (gegen Feuchtigkeit/Staub einerseits und EMV-Abstrahlung andererseits) Dichtung wird dabei zwischen den Rahmenprofilen und den Schirmblechen angeordnet, insbesondere durch Eindrücken entsprechend abgelenkter Stücke der kombinierten Dichtung in entsprechende Nuten der Rahmenprofile.

Neben einem ersten Rahmenprofil umfaßt der Bausatz auch ein zweites, hinsichtlich seines Querschnittes kleineres, Rahmenprofil, dessen Aufbau ansonsten analog zum ersten Rahmenprofil ist, und ferner zu diesem zweiten Rahmenprofil passende zweite Würfelverbinder und auch ggf. zweite Winkelverbinder, die im folgenden beschrieben werden.

Das zweite Rahmenprofil wird zum Erstellen kleinerer und damit weniger Stabilität benötigender Korpusrahmen benutzt.

Vorzugsweise umfaßt der Bausatz auch ein drittes Rahmenprofil, dessen Querschnittsgröße dem des zweiten Rahmenprofils entspricht, welches jedoch einen plattenförmigen Fortsatz parallel zu und fluchtend mit einer der Außenflächen des Querschnittes des Profiles einstückig aufweist. Diese dritte Profilform wird vorzugsweise zum Erstellen nicht vollständig in sich geschlossener, kleinerer, Profilrahmen verwendet, wobei der plattenförmige Fortsatz zum Befestigen, insbesondere Verschrauben, von Ausstattungsteilen des Verteilerschrankes dient.

Zum Befestigen von weiteren Profilen, insbesondere in Form von Querstreben, aber auch anderen Bauteilen wie Montagerahmen, elektrischen Einbauten etc. umfaßt der Bausatz weiterhin einen Winkelverbinder, dessen zwei im rechten Winkel zueinander stehende Schenkel mit dem einen Schenkel gegen die Außenfläche eines der Profile gesetzt werden und dessen anderer Schenkel hiervon im rechten Winkel abstrebt. Beide Schenkel sind mit Durchgangsbohrungen ausgestattet. Gegenüber dem Profil erfolgt die Fixierung durch Hindurchstecken einer Schraube und Verschrauben in einer Nutmutter im Inneren einer hinterschnittenen Nut des Profiles.

Vorzugsweise werden dabei Nutmuttern verwendet, deren verbreiterter Kopf in der Aufsicht länglich ausgebildet ist, so daß sie bei fluchtender Ausrichtung zur hinterschnittenen Nut von deren offenere Seite her, also nicht stirnseitig, eingebracht und anschließend durch Verdrehen formschlüssig dort gesichert werden können.

Auf die gleiche Art und Weise werden auch Außenhalter an den Profilen befestigt, die mehrere Funktionen erfüllen:
Zum einen dem Einhängen der Abstandsbeplankung aus Kunststoff außen im Abstand am Profilrahmen:
   Zu diesem Zweck werden die Außenhalter, die im wesentlichen würfelförmig mit einem nach außen abragenden Zapfen gestaltet sind, mit nach oben ragendem Zapfen auf den Außenflächen der Profile an den Seiten und an der Rückwand des Korpusrahmens befestigt, meist je vier Stück auf jeder Außenseite des Korpusrahmens. Die Seitenwände und die wenigstens eine Rückwand weisen entsprechende vertikale Aufnahmeöffnungen auf, mit denen sie über die Zapfen der Außenhalter gehängt werden können. Vorzugsweise werden dazu wiederum die identischen Außenhalter verwendet, die zu diesem Zweck auf der Innenseite der Seitenwand bzw. Rückwand verschraubt werden und in ihrer Unterseite eine Öffnung zur Aufnahme des Zapfens aufweisen.

Auch zwei oder mehr Aufhängehaken können an den Profilen an der Oberseite des Innenkorpus befestigt werden, um den gesamten Innenkorpus, eventuell bereits mit Abstandsbeplankung versehen, mittels eines Kranes hochheben und versetzen zu können.

Weiterhin umfaßt der Bausatz vorzugsweise einen Schiebetür-Befestigungsteil zum Befestigen und Lagern einer Schiebetür am Innenkorpus, Drehnasen zum formschlüssigen einfachen Befestigen eines Schirmbleches als Bodenblech am Innenkorpus, Sicherungshülsen zum Fixieren in einer hinterschnittenen Nut eines der Profile und zum Einhängen eines Sicherungsbügels gegen Zuklappen der Tür, sowie eine erste kombinierte Dichtung zum Abdichten der Türen gegenüber dem restlichen Innenkorpus im geschlossenen Zustand der Tür.

Die genannten Bauteile weisen dabei folgende Gestaltungsmerkmale auf:

Der Bausatz ist dadurch gekennzeichnet, dass
- die Abstandsbeplankung des Innenkorpus neben der wenigstens einen Tür wenigstens eine separate Rückwand und wenigstens zwei separate Seitenwände und wenigstens einen separaten Deckel umfaßt;
und/oder
- die Abstandsbeplankung des Innenkorpus neben der wenigstens einen Tür aus einem ansonsten einstückigen Außenkorpus, insbesondere einstückig zusammen mit dem Deckel, besteht;
und/oder
- der Korpusrahmen aus Metall ein kubischer Rahmen mit Kantenprofilen entlang der Außenkanten des Kubus ist, wenigstens entlang der Außenkanten der Seitenflächen des Kubus, insbesondere entlang aller Außenkanten des Kubus, insbesondere mit zusätzlichen Querstreben im Verlauf der Außenflächen des Kubus, wobei die Kantenprofile aus dem ersten Rahmenprofil bestehen, die an den Ecken des Kubus über die ersten über die ersten Würfelverbinder miteinander verbunden sind, an denen sie mit ihren Stirnseiten anliegen und fixiert sind;
und/oder
- der erste Würfelverbinder zentrale Durchgangsbohrungen in wenigstens zwei, insbesondere allen drei, Raumrichtungen jeweils lotrecht zu seinen Außenflächen aufweist, die insbesondere wenigstens teilweise als Gewindebohrungen ausgebildet sind;
und/oder
- das erste Rahmenprofil in wenigstens einer seiner Außenflächen eine hinterschnittene T-Nut aufweist, insbesondere in allen seinen Außenflächen, und/oder in wenigstens einer Außenecke seines Querschnitts eine Diagonalnut, die insbesondere ebenfalls hinterschnitten ist und nach diagonal außen offen ist, und insbesondere in allen Außenecken des ersten Rahmenprofils angeordnet ist;
und/oder
- das erste Rahmenprofil einen rechteckigen, insbesondere quadratischen, Querschnitt aufweist und insbesondere symmetrisch zur Mitte ausgebildet ist und insbesondere in der Mitte seines Querschnitts eine Zentralbohrung aufweist, in die eine erste Dübelbuchse stirnseitig einschraubbar ist, die auf ihrer Außenseite ein selbstschneidendes Außengewinde zum Eindrehen in die Zentralbohrung aufweist und in ihrem Innenumfang ein Innengewinde, insbesondere ausgebildet als metrisches Gewinde zur Aufnahme von Eck-Befestigungsschrauben, die durch die Querbohrung des ersten Würfelverbinders hindurch eingeschraubt werden können und der Verbindung des ersten Rahmenprofils mit dem ersten Würfelverbinder dienen;
und/oder
- die Einsteckprofile ein Einsteckteil zum Stecken in die T-Nut des ersten Rahmenprofiles aufweisen, welches insbesondere nach außen vorstehende Nasen zum formschlüssigen Hintergreifen des Hinterschnitts der T-Nut aufweisen, sowie beidseits über das Einsteckteil seitlich überstehenden, plattenförmigen Rand;
und/oder
- der Rand zwischen seiner freien Außenkante und dem Einsteckteil einen Abstandshalter aufweist entsprechend der Dicke der Schirmbleche und die Breite des Einsteckprofiles insbesondere kleiner ist als die Breite des ersten Rahmenprofils, insbesondere kleiner als die Breite zwischen zwei benachbarten Diagonalnuten des ersten Rahmenprofils;
und/oder
- das Einweg-Einsteckprofil eine von der einen zur anderen Außenkante durchgehende Platte umfaßt, deren Randbereiche auch den Rand bildet, und das Einsteckteil insbesondere aus zwei beabstandeten, einzelnen, einstückig mit dem Rest ausgebildeten Stegwänden besteht;
und/oder
- das demontierbare Einsteckprofil im wesentlichen hutförmig ausgebildet ist mit einem U-förmigen, nach außen offenen Einsteckteil und von dessen freien Enden quer nach außen abragenden Rändern, wobei das U-förmige Einsteckteil nahe seines offenen Endes nach innen vorstehende Fortsätze aufweist und im unbelasteten Zustand insbesondere die äußere Breite des Einsteckteiles geringer ist als die Öffnungsweite der T-Nut;
und/oder
- eine Spreizschraube zum Einschrauben in die offene Seite des Einsteckteils des demontierbaren Einsteckpropfils und Aufspreizen dessen U-förmigen Einsteckteiles soweit, dass eine formschlüssige Verrastung in der T-Nut erfolgt;
und/oder
- das zweite Rahmenprofil analog zum ersten Rahmenprofil ausgebildet ist, jedoch mit demgegenüber verkleinerten Außenabmessungen, insbesondere auch verkleinerten Abmessungen der Diagonalnut und/oder der T-Nut und/oder der Zentralbohrung;
und/oder
- der Innendurchmesser der Zentralbohrung des zweiten Rahmenprofils dem Innendurchmesser der ersten Dübelbuchse des ersten Rahmenprofils entspricht;
und/oder
- die Diagonalnut identisch und gleich groß wie die Diagonalnut ausgebildet ist;
und/oder
- der zweite Würfelverbinder analog zum ersten Würfelverbinder ausgebildet ist, jedoch mit einer Kantenlänge gleich oder kleiner der Breite des zweiten Rahmenprofils;
und/oder
- die Schenkel an ihren Außenflächen in Längsrichtung der Schenkel verlaufende mittige Erhebungen aufweisen mit einer Breite passend zur Öffnungsbreite der T-Nuten;
und/oder
- die Durchgangsbohrungen schräggestellt sind und parallel zum 45°-Winkel zwischen den beiden rechtwinklig zueinander stehenden Schenkeln verlaufen, so daß die Winkelverbinder als Spritzgussteil mittels einer Form ohne beweglichen Schieber hergestellt werden können mit Entformungsrichtung entlang der Diagonalen;
und/oder
- der plattenförmige Fortsatz des dritten Rahmenprofils über die mit ihm fluchtende Außenfläche des Rahmenprofils geschlossen durchgeht und das Rahmenprofil somit maximal an den drei übrigen Außenflächen eine nach außen offene, hinterschnittene T-Nut aufweist;
und/oder
- das dritte Rahmenprofil maximal an den beiden von dem plattenförmigen Fortsatz und der entsprechenden Außenfläche gegenüberliegenden Außenecken Diagonalnuten aufweist, insbesondere nur an der Außenecke, welcher der Außenecke, von dem der plattenförmige Fortsatz abstrebt, diagonal gegenüberliegt, und insbesondere alle übrigen Eckbereiche des Profils als geschlossenes Hohlkammerprofil, insbesondere mit rundem Innenquerschnitt, ausgebildet sind;
und/oder
- wenigstens ein Teil des Außenquerschnittes des Dichtungsteils mit einer elektrisch leitenden, vorzugsweise metallischen, Beschichtung, insbesondere einem metallischen Gewebe beschichtet ist, welches sich auf wenigstens einer Seite, bei der ersten kombinierten Dichtung insbesondere auf beiden Seiten bis in den Bereich des Einsteckteiles erstreckt, so dass beim Einstecken der Dichtungen in eine dieser Diagonalnuten das metallische Gewebe Kontakt mit dem Rahmenprofil erhält;
und/oder
- eine schwenkbare erste oder zweite Nutmutter, die formschlüssig in die T-Nut des ersten oder zweiten oder dritten Rahmenprofils eingesetzt werden kann mit einem verbreiterten Kopfteil, welches in der Aufsicht eine längliche Form besitzt, dessen Breite geringer ist als die Öffnungsweite der T-Nut und dessen Länge vorzugsweise größer ist als die größte Breite des hinterschnittenen Teils der T-Nut und die insbesondere an zwei diagonal gegenüberliegenden Ecken des Kopfteiles Abschrägungen aufweist, die parallel zueinander liegen, und deren Abstand der Breite des hinterschnittenen Teils der T-Nut entspricht;
und/oder
- die Innengewinde-Bohrung der Nutmutter eine solche Drehrichtung, insbesondere eine normale Rechts-Drehrichtung, aufweist, dass beim Einschrauben einer Schraube in die Gewindebohrung die Abschrägungen gegen die seitlichen Flanken der T-Nut gedrückt werden und durch Festziehen der Schraube gedrückt bleiben zusätzlich zum Außenziehen der Nutmutter;
und/oder
- wenigstens ein Schirmblech, dessen Außenabmessungen den Außenabmessungen einer Außenfläche des Kubus des Innenrahmens entsprechen, jedoch kleiner als der Abstand zwischen den einander gegenüberliegenden T-Nuten der entsprechenden Rahmenprofile, die die Kantenprofile des Innenkorpus bilden sowie mit einer Dicke maximal der Höhe der Abstandshalter der Einsteckprofile;
und/oder
- der Haltestöpsel ein verbreitertes Kopfteil zum Übergreifen und insbesondere Halten des Randes insbesondere eines Schirmbleches aufweist sowie einen Abstandshalter entsprechend der Dicke des Schirmbleches und einen Einsteckteil mit in der Aufsicht länglicher Form zum Einstecken in eine der T-Nuten von außen und formschlüssigem Verriegeln darin nach Drehung um ca. 90°;
und/oder
- die Außenenden des Einsteckteiles bogenförmig gerundet sind und die Länge des Einsteckteiles geringfügig größer ist als die Breite der T-Nut;
und/oder
- ein Außenhalter zur Befestigung von Bauteilen, insbesondere Rückwand, Seitenwand, Dachmodul, am Korpusrahmen, mit einem Grundkörper etwa in Form eines hohlen Würfels mit fehlendem Deckel und einem von einer Seitenwand des Grundkörpers rechtwinklig nach außen abstehenden, insbesondere massiven, insbesondere leicht konisch sich nach außen verjüngenden, Zapfen;
und/oder
- sowohl der Boden eine Durchgangsöffnung als auch die Wände Durchgangsöffnungen aufweisen, wobei die einander gegenüberliegenden Durchgangsöffnungen in den beiden zu dem Zapfen benachbarten Wänden miteinander fluchten;
und/oder
- der Boden eine nach außen gerichtete, vorzugsweise quadratische, Erhebung aufweist, dessen Kantenlänge geringfügig kleiner ist als die Öffnungsweite der T-Nut;
und/oder
- die Innenflächen der Seitenwand und/oder der Rückwand Befestigungsflächen mit Sacklochbohrungen zum Ansetzen und Verschrauben eines Außenhalters mit seinem Boden gegen Seitenwand bzw. Rückwand aufweisen;
und/oder
- die Durchgangsöffnung in der dem Zapfen gegenüberliegenden Wand zentral positioniert und ausreichend groß ist zur Aufnahme eines Zapfens eines darunter liegenden, nächsten Außenhalters;
und/oder
- eine Sicherungsstange zum Hindurchschieben durch die Durchgangsöffnungen zweier auf gleicher Höhe angeordneter, von den Seitenflächen des Korpusrahmens und dessen Kantenprofilen nach außen ragenden Außenhalter und Hindurchschieben durch Sicherungsfortsätze des Dachmoduls, die vom Dachmodul aus vertikal nach unten ragen zwischen dem Korpusrahmen und den Seitenwänden des Außenkorpus, welche ebenfalls entsprechende, mit den Durchgangsöffnungen des Außenhalters fluchtende, Durchgangsöffnungen aufweisen;
und/oder
- das Dachmodul einen außen nach unten ragenden Rand aufweist, der soweit außen positioniert ist, daß er die Oberkante der Seitenwände und der Rückwand übergreift;
und/oder
- der untere Teil der Nase einen Sechskant-Außenumfang entsprechend eines Sechskant-Schraubenkopfes aufweist und insbesondere die Drehnase eine Durchgangsbohrung mit erweitertem Bereich auf der Oberseite aufweist zum Durchstecken einer Befestigungsschraube gegenüber z. B. dem Schirmblech;
und/oder
- eine Tür-Sicherungshülse zum axialen Einschieben in die T-Nut mit einer Durchgangsbohrung in Längsrichtung und Abfräsungen am Außenumfang in Längsrichtung, so daß der verjüngte Teil des Querschnitts der Sicherungshülse aus der T-Nut herausragt sowie einer Querbohrung mit Innengewinde durch die gesamte Sicherungshülse hindurch zum Verklemmen der Sicherungshülse in der T-Nut und einen U-förmigen Sicherungsbügel zum Einstecken mit seinem frei endenden Schenkel einerseits in die Längsdurchgangsöffnung der Sicherungshülse und andererseits in eine entsprechende Ausnehmung auf der Innenseite der Tür;
und/oder
- der Befestigungsbeschlag ein Befestigungsteil umfaßt, welches an der Innenseite einer Schiebetür befestigt wird und einen nach hinten vorstehenden Zapfenteil umfaßt, sowie einen Sicherungsteil mit einer Sicherungsfeder, die auf das Zapfenteil zur formschlüssigen Sicherung aufschiebbar ist;
und/oder
- die T-Nut in ihrem Verlauf an wenigstens einer Stelle einen vergrößerten Öffnungsbereich zum Einschieben des Zapfenteiles des Befestigungsteiles des Schiebetür-Befestigungsanschlages aufweist;
und/oder

Der Bausatz ist weiterhin kennzeichnet durch:
und/oder
- eine erste Dübelbuchse;
und/oder
- eine zweite Dübelbuchse passend zu der zweiten Zentralbohrung vom zweiten Rahmenprofil;
und/oder
- ein zweites Rahmenprofil;
und/oder
- einen zweiten Würfelverbinder;
und/oder
- einen ersten und/oder zweiten Winkelverbinder passend zum ersten bzw. zweiten Rahmenprofil, wobei der Winkelverbinder aus zwei einstückig miteinander verbundenen Schenkeln besteht, welche insbesondere entlang der Außenkanten über etwa dreieckige einstückige Stegwände gegeneinander versteift sind und in jedem Schenkel eine Durchgangsbohrung, insbesondere in Form eines Langloches vorhanden ist zum Einschrauben in eine erste bzw. zweite Nutmutter, insbesondere erste bzw. zweite schwenkbare, unsymmetrische, Nutmutter passend in die erste bzw. zweite T-Nut;
und/oder
- ein drittes Rahmenprofil, welches in Verlängerung einer seiner Querschnitts-Außenkante einen plattenförmigen Fortsatz einstückig aufweist, ansonsten in seinen Querschnittsabmessungen dem ersten oder zweiten Rahmenprofil entspricht;
und/oder
- eine erste kombinierte Dichtung mit im wesentlichen rechteckigem, massiven Querschnitt, insbesondere mit einem etwa rechteckigen Einsteckteil, insbesondere zum Einstecken in eine der Diagonalnuten des ersten, zweiten oder dritten Rahmenprofils.
und/oder
- eine zweite kombinierte Dichtung mit einem hohlen, schlauchförmigen Dichtungsteil und einem massiven, etwa rechteckigen Einsteckteil, der insbesondere zum Einstecken in eine der Diagonalnuten des ersten oder zweiten Rahmenprofils;
und/oder
- einen Haltestöpsel, insbesondere aus Kunststoff, zum Einsetzen und Verriegeln durch 90° Drehung in einer der T-Nuten des ersten oder zweiten Rahmenprofils;
und/oder
- eine Sicherungsstange zum Sichern des Deckels am Korpus-Rahmen, passend zur Durchgangsöffnung in der Aufhängeöse;
und/oder
- eine Scharnierstange als Scharnierachse zum Verbinden einer Tür mit einer Seitenwand durch vertikale Scharnierbohrungen einerseits in dem Seitenteil und andererseits in der Tür, wobei insbesondere die Scharnierstange an ihrem einen, oberen Ende einen verbreiterten Flansch aufweist;
und/oder
- Schirmbleche aus Metall, insbesondere Aluminium, zum Beplanken des Korpus-Rahmens, und insbesondere zum Verschließen des Bodenbereiches des Korpus-Rahmens;
und/oder
- Drehnasen zur Verschraubung an Schirmblechen mit wenigstens einer seitlich überstehenden Nase zum Eindrehen in die T-Nut des ersten Rahmenprofiles, wobei insbesondere der Höhenabstand der Nase gegenüber der Basisfläche der Drehnase dem Abstand von der Außenkante des Profiles bis zu dessen T-Nut entspricht;
und/oder
- ein Schiebetüren-Befestigungsbeschlag zum Einsetzen und Fixieren in einer der T-Nuten des ersten oder zweiten Rahmenprofiles.

### c) Ausführungsbeispiele

Eine Ausführungsform gemäß der Erfindung ist im folgenden anhand der Figuren beispielhaft näher beschrieben. Es zeigen:
- Fig. 1a-c:: eine Ecksituation des Profilrahmens mit einigen verbauten Einzelteilen in verschiedenen Ansichten,
- Fig. 1d-f:: Querschnittsdarstellungen dreier verschiedener Rahmenprofile,
- Figuren 2:: Detaildarstellungen der oberen Ecke eines teilweise fertiggestellten Korpus mit separater Darstellung einiger Einzelteile,
- Figuren 3:: Darstellungen zur Befestigung von Schiebetüren,
- Fig. 4a:: eine Detaildarstellung des Innenkorpus,
- Fig. 4b-c:: Einsteckprofile,
- Fig. 5a:: die bodenseitige Befestigung eines Schirmbleches am Profilrahmen,
- Fig. 5b:: eine Haltenase,
- Fig. 5c:: einen Winkelverbinder,
- Figuren 6:: eine Nutmutter,
- Fig. 7:: den Innenkorpus allein,
- Fig. 8:: beplankt mit Seitenteilen,
- Fig. 9:: mit zusätzlichen Verkleidungen vorne und hinten im unteren Bereich,
- Fig. 10:: mit zusätzlicher angebrachter Rückwand und vorderen Türen,
- Fig. 11:: mit zusätzlich aufzusetzendem Dachmodul, und
- Fig. 12:: im fertig zusammengebauten Zustand des Korpus.

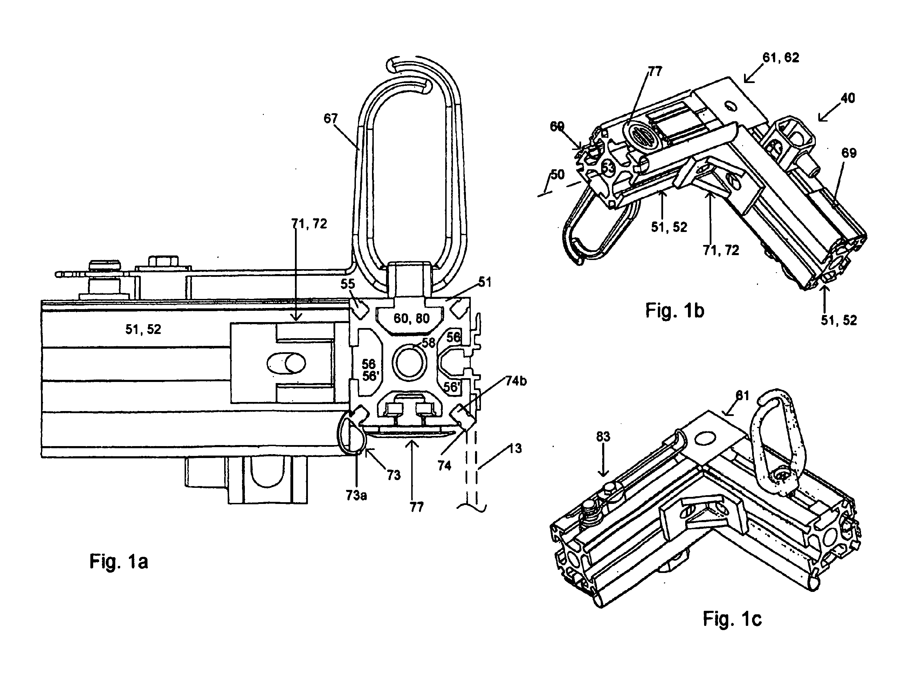

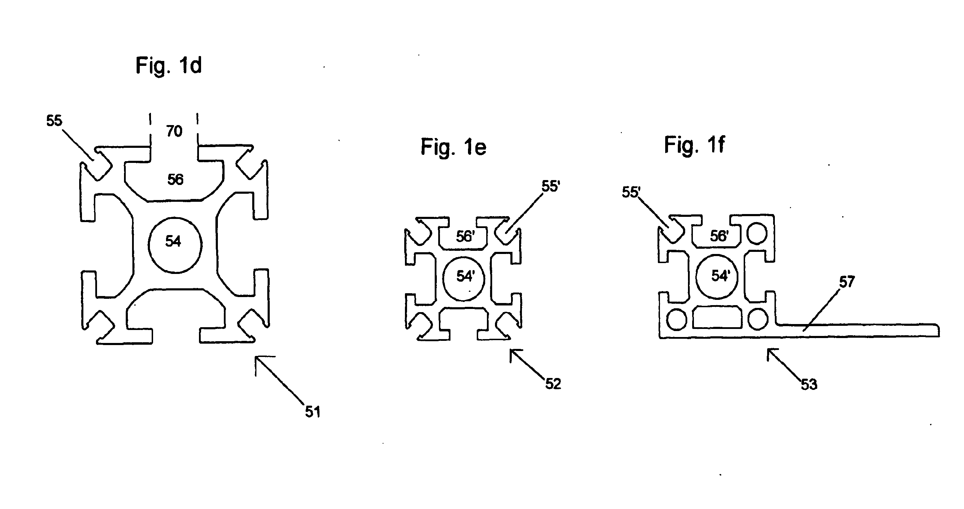

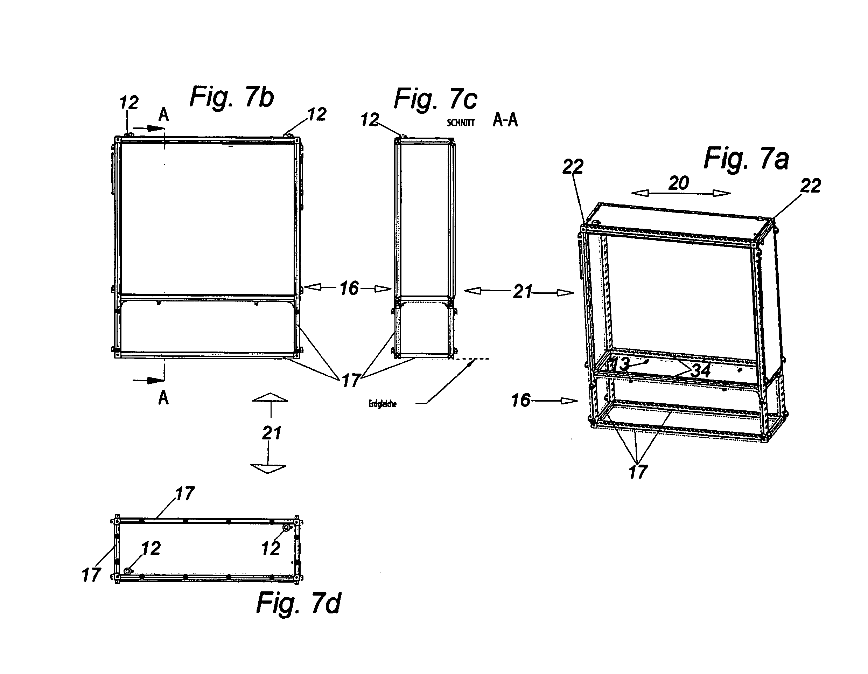

Die Figuren 7 bis 12 zeigen die zunehmend komplettierten Aufbauphasen eines Korpus 3, wobei mit Hilfe des erfindungsgemäßen Bausatzes unterschiedlich große Korpusse herstellbar sind, und zwar aus unterschiedlichen Profilen 51 - 53 gemäß Fig. 1d - 1f und den zugehörigen Anbauteilen. Der Innenkorpus besitzt eine kubische Form und ist eigenstabil aufgrund eines Korpusrahmens 16, der aus Kantenprofilen 17 zusammengesetzt, die an ihren Enden, insbesondere in den Ecken des Korpusrahmens 16, über entsprechende Eckverbinder miteinander verbunden, insbesondere verschraubt, sind.

Zusätzlich zu den Kantenprofilen 17 entlang der Kanten des kubusförmigen Innenkorpus 21 verlaufen Querstreben 34 horizontal umlaufend zwischen den senkrechten Streben im unteren Drittel des Korpusrahmens 16, gegenüber denen Justier-Schrauben 13 ebenfalls horizontal von Außen nach Innen gerichtet angeordnet sind.

Die Justier-Schrauben 13 sind dabei paarweise zueinander beabstandet an jeweils der in Querrichtung verlaufenden vorderen und hinteren Querstrebe 34 angeordnet, vorzugsweise auch je eine in der Mitte der quer zur Querrichtung 20 verlaufenden kurzen Querstreben.

Der Korpusrahmen 16 ist an den Seiten, an der Rückseite und an der Oberseite verschlossen durch - vorzugsweise EMV-Dichte Platten, die vorzugsweise im Dickenbereich der Kantenprofile 17 liegen, so dass nur die Vorderseite, insbesondere dabei nur der oberhalb der Querstrebe 34 liegende Bereich, offen ist sowie die Basisfläche zwischen den unten umlaufenden Kantenprofilen 17.

Auf der oberen Beplankung liegend sind zwei Einschraub-Hebeösen 12 dargestellt, die bei Bedarf, nämlich für das Hochheben dieses Innenkorpus 21, in nach oben gerichtete, oben offene Innengewinde 22 zweier diagonal gegenüberliegender oberer Eckverbinder des Korpusrahmens 16 einschraubbar sind.

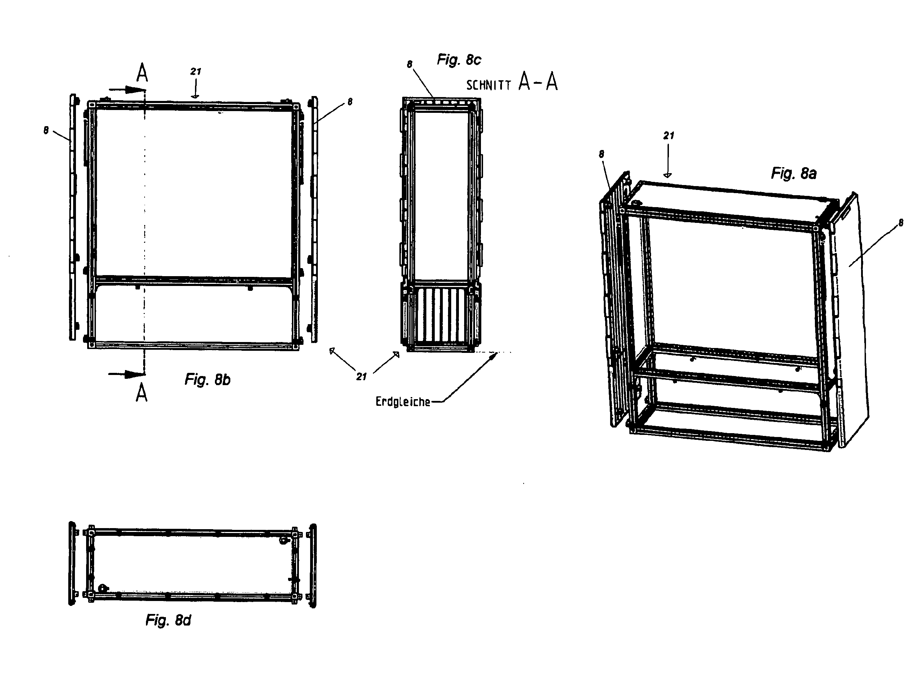

Die Fig. 8 zeigen demgegenüber einen Zustand, in dem der so beschriebene Innenkorpus 21 bereits mit Seitenwänden 8 ausgestattet wird, die von außen gegen die Seitenflächen des Innenkorpus 21 gesetzt und durch Absenken formschlüssig mit diesem verbunden oder auf andere Art und Weise befestigt werden.

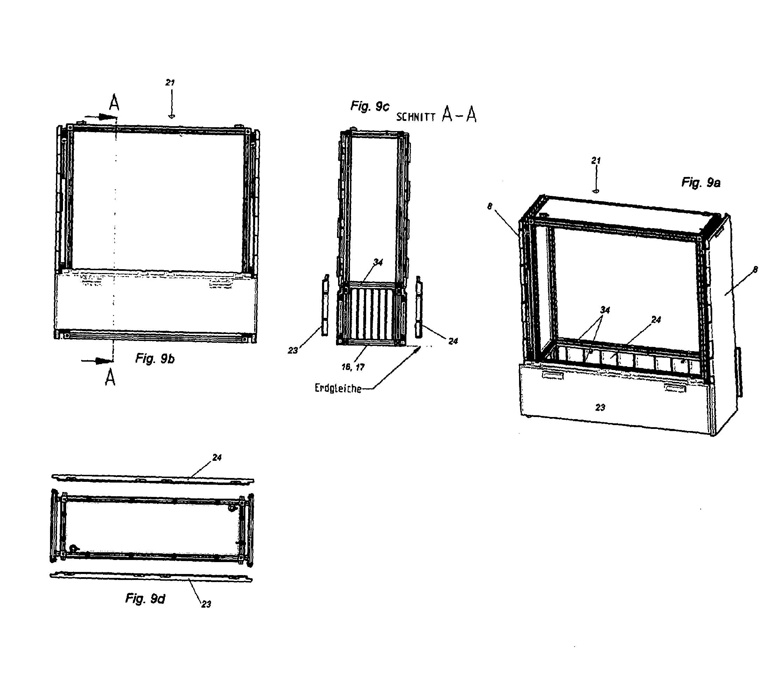

Fig. 9 zeigt einen Zustand, in dem gegenüber der Ausstattung gemäß Fig. 8 eine Frontklappe 23 und eine Heckklappe 24 - die vorzugsweise wie die Seitenwände 8 sowie der Rest der Verkleidung vorzugsweise aus Kunststoff bestehen - den vorderen und hinteren unteren Bereich den Innenkorpus 21 bedecken, indem sie ebenfalls vorzugsweise formschlüssig an diesen von außen aufgesetzt oder anderweitig befestigt sind und dadurch den Bereich von den im unteren Drittel umlaufenden Querstreben bis zu dem unteren Ende des Korpusrahmens 16 vorne und hinten verschließen, wogegen ja die Seitenwände 8 über die gesamte Höhe des Korpusrahmens 21 vorzugsweise durchgehen.

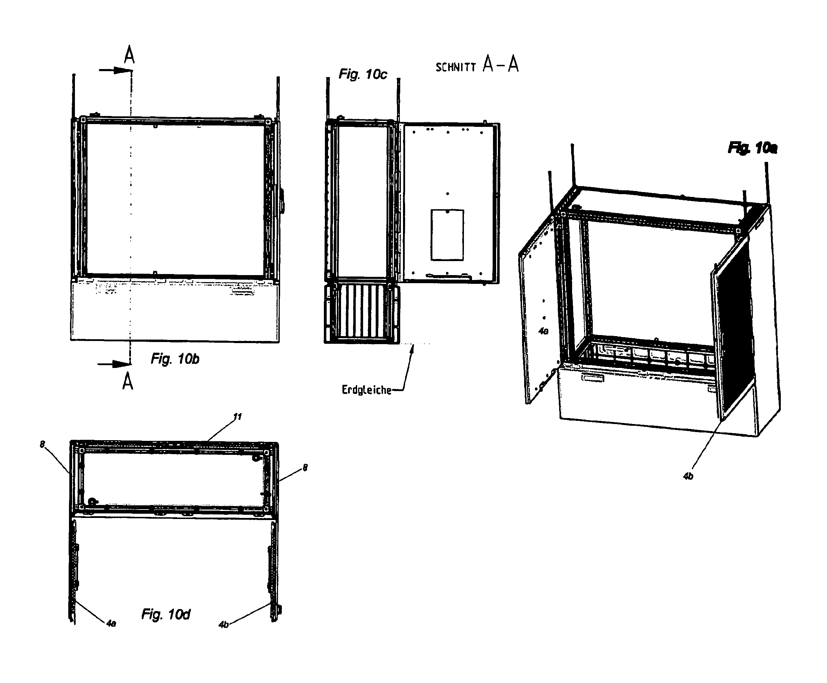

Die Fig. 10 zeigen einen Zustand, in dem der Innenkorpus 21 zusätzlich mit einer Rückwand 11 sowie frontseitigen Türen 4a, b ausgestattet ist. Die Türen 4a, b sind dabei an den Längsaußenkanten der Vorderseite in entsprechende Scharnieren als Schwenkachse eingehängt, während die Rückwand 11 wiederum von außen durch Einhängen von oben oder anderweitig befestigt wird.

Wie vor allem die Aufsichten 10d und 9d zeigen, sind Rückwand 11, Seitenwände 8 zum Innenkorpus 21 hin nach außen versetzt im Abstand - oben und unten offen - positioniert, so dass dazwischen Luft durch den Kamineffekt bedingt nach oben strömen kann.

Auch die Türen 4a, b sind aus dem gleichen Grund doppelwandig mit Durchgangsöffnungen von unten nach oben ausgebildet, wobei vorzugsweise die innere Wandung der Türen 4a, b wiederum EMV-dicht ausgebildet ist.

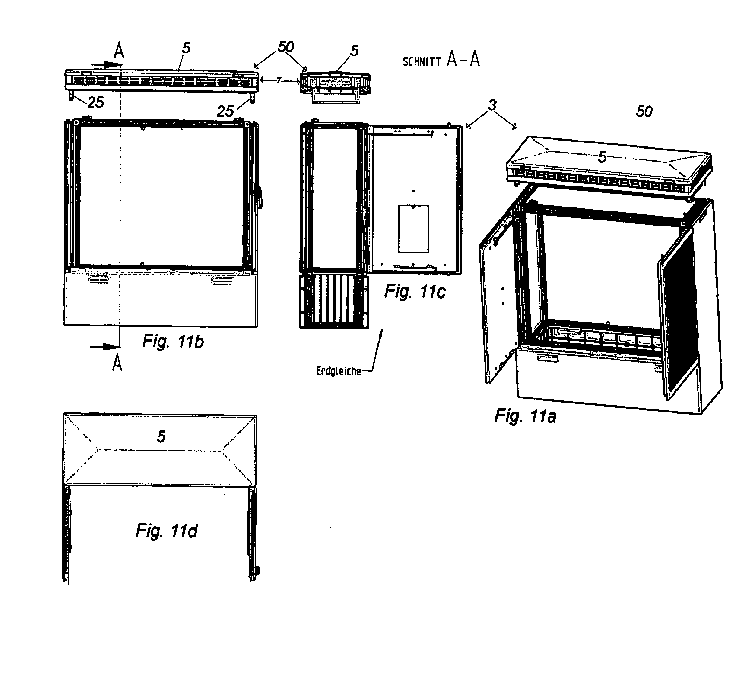

Die Fig. 11 zeigen den Zustand des Korpus 3 beim Komplettieren durch Aufsetzen des Dachmoduls 50, welches aus einem oberen Zwischenteil 7 und einem Deckel 5 besteht, und vorzugsweise nach unten ragende Fortsätze 25 zum Einschieben in den restlichen Korpus 3, insbesondere zwischen dessen Innenkorpus 21 und dessen äußerer Verkleidung und Verschraubung mit dem Innenkorpus 21, insbesondere dessen Korpusrahmen 16, dienen.

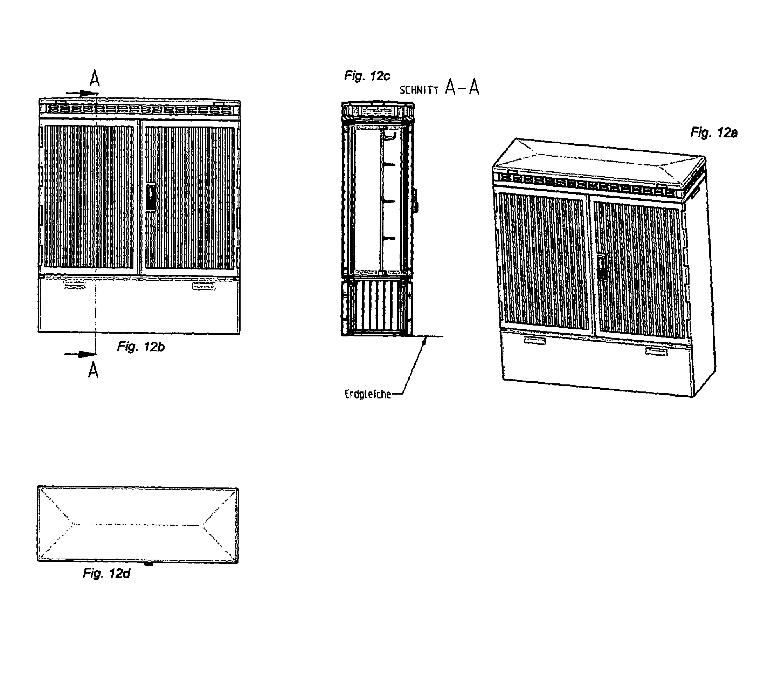

Da das Dachmodul 50 in der Aufsicht betrachtet über den Innenkorpus 21 hinausragt und auch Rückwand 11, Seitenwände 8 sowie die Türen 4a, b im geschlossenen Zustand überdeckt, verhindert das fixierte Dachmodul 50 - wie im Endzustand der Fig. 12 dargestellt - das Anheben dieser Teile nach oben und damit deren Entfernung vom Innenkorpus 21.

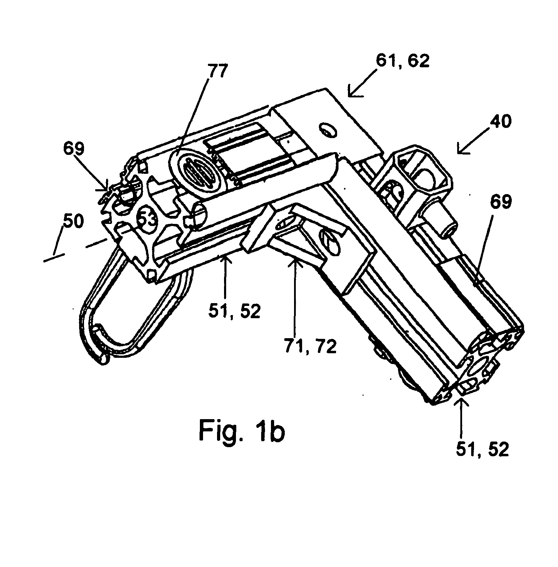

Die Fig. 1 bis 6 zeigen einzelne Einbausituationen bzw. die dabei verbauten Einzelteile.

Die Fig. 1a bis 1c zeigen eine Ecke eines Profilrahmens, erstellt aus zwei auf das gewünschte Maß abgelenkten Stücken eines ersten Rahmenprofils 51, die mit ihren Stirnseiten an zwei benachbarten, im rechten Winkel zueinander liegenden, Außenflächen eines dazu passenden ersten Würfelverbinders 61 anliegen und mit diesem verschraubt sind. Weist das erste Rahmenprofil 51 - wie Fig. 1d zeigt - einen etwa quadratischen, mittensymmetrischen Querschnitt auf, der - wie bei jedem Profil - in Verlaufsrichtung 50 des Profiles gleich bleibt. Im Zentrum des Querschnitts befindet sich eine umfänglich geschlossene Zentralbohrung 54. In den Außenecken befinden sich jeweils identische Diagonalnuten 55, die diagonal nach außen offen sind und einen geringfügigen Hinterschnitt aufweisen. In den Außenflächen sind mittig jeweils großzügig hinterschnittene T-Nuten 56 angeordnet, deren Öffnungsweite 70 maximal die Hälfte der größten Breite des hinterschnittenen Teils beträgt und maximal ein Drittel der Breite des Profiles 51.

In analoger Weise kann ein Innenkorpus auch aus dem im Querschnitt kleineren, ansonsten jedoch analog ausgebildeten zweiten Rahmenprofil 52 mit dazu passenden Anbauteilen, insbesondere Würfelverbindern 62 und Winkelverbindem 72 hergestellt werden.

Für Spezialfälle zeigt Fig. 1f ein drittes Rahmenprofil 53, welches einen plattenförmigen Fortsatz 57, einstückig zusammen mit dem Rahmenprofil 53 ausgebildet und fluchtend zu einer seiner Außenflächen, aufweist. Der Rest des dritten Rahmenprofils 53 entspricht von den Außenabmessungen dem zweiten Rahmenprofil 52, jedoch ist nur in einer Außenecke eine Diagonalnut 55' ausgebildet, und zwar diagonal gegenüber von der Ecke, von der der plattenförmige Fortsatz 57 fortragt. Die übrigen Eckbereiche sind mit einer geschlossenen Außenecke und im Eckbereich angeordneter umschlossener, runder Ausnehmung gebildet.

Dieses dritte Rahmenprofil dient vor allem zum Erstellen von Profilrahmen-Teilen, wie etwa Seitenrahmen, wobei der plattenförmige Fortsatz 57 dabei vorzugsweise ins Innere eines solchen rechteckigen Rahmenteiles weisend angeordnet werden, und vor allem dieses dritte Rahmenprofil 53 auch mit dem zweiten Rahmenprofil 52 kombiniert werden kann.

Insbesondere sind die Diagonalnuten 55 und 55' nicht nur gleich gestaltet, sondern auch gleich groß bei beiden Profilgrößen, also allen drei Rahmenprofilen 51 bis 53, so dass die gleichen dort unterzubringenden Dichtungen eingesteckt werden können.

Zurück zu den Fig. 1a bis c werden diese im Folgenden so beschrieben, also ob sie aus dem ersten Rahmenprofil 51 und den zugehörigen Anbauteilen hergestellt seien. Der erste Würfelverbinder 61 ist mit den Stirnflächen der angrenzenden Rahmenprofile 51 verschraubt, indem er in Verlaufsrichtung 50 der beiden Rahmenprofile und auch in der dritten Richtung Durchgangsbohrungen aufweist, durch welche hindurch eine Befestigungsschraube in die Zentralbohrung 54 des angrenzenden Rahmenprofils 51 eingeschraubt werden kann, und zwar in eine in der Zentralbohrung 54 selbstschneidend vorher eingeschraubte erste Dübelbuchse 58, die als Innengewinde zusätzlich ein metrisches Gewinde zur Aufnahme der Befestigungsschraube besitzt.

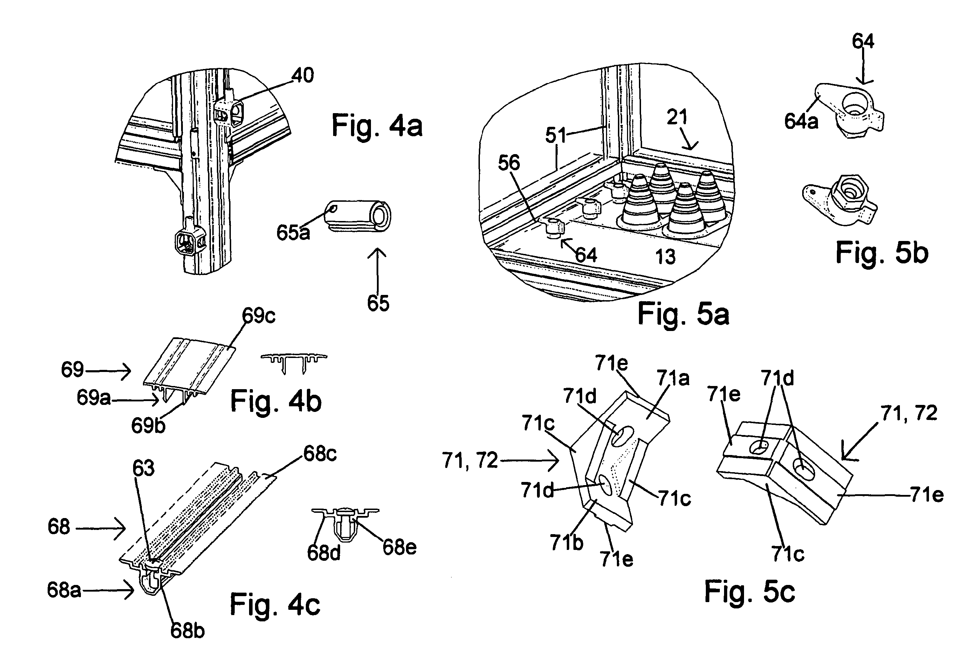

Zusätzlich ist in der Innenecke zwischen den Rahmenprofilen 51 ein Eckverbinder 71 verschraubt, der in der Praxis primär dem stumpfen Ansetzen eines Rahmenprofils 51, beispielsweise als Querstrebe 34, wie den Fig. 7 bis 12 zu entnehmen, an eine Seitenfläche eines anderen, durchgehenden Rahmenprofils dient. Zu diesem Zweck besitzt der Winkelverbinder 71 bzw. 72, wie er als Einzelteil in Fig. 5c dargestellt ist, zwei im rechten Winkel zueinander verlaufende Schenkel 71a, b, die randseitig durch dreieckige, damit einstückig verbundene Stegwände 71c gegeneinander versteift sind. In den Schenkeln 71a, b befindet sich jeweils eine Durchgangsbohrung 71d, die in Richtung der Winkelhalbierenden zwischen den Schenkeln 71a, b verläuft zur leichteren Ausformung dieses im Spritzgussverfahren hergestellten Teiles.

Auf den Außenflächen der Schenkel 71a, b sind in deren Längsrichtung verlaufend über die gesamte Länge Erhebungen 71e ausgebildet, deren Breite geringfügig kleiner ist als die Öffnungsweite 70 der entsprechenden T-Nut 56, 56' des zugehörigen Rahmenprofils 51, 52 oder 53.

Nach Anlegen des Winkelverbinders 71 mit einer Außenfläche eines Schenkels an eine Seitenfläche des Profils 51, wobei die Erhebung 71e in die Öffnungsweite 70 der T-Nut 56 eintaucht, kann eine (in den Fig. 1 nicht dargestellte) Befestigungsschraube durch die entsprechende Durchgangsbohrung 71d hindurch in eine Nutmutter 60 bzw. 80 hineingeschraubt werden, die sich formschlüssig in der T-Nut 56, 56' verspannt und dadurch den Winkelverbinder 71 am Profil 51 fixiert. Am anderen Schenkel zum Beispiel 71b kann dann ein weiteres Bauteil, beispielsweise das anderen Rahmenprofil 51, in gleicher Weise verschraubt werden.

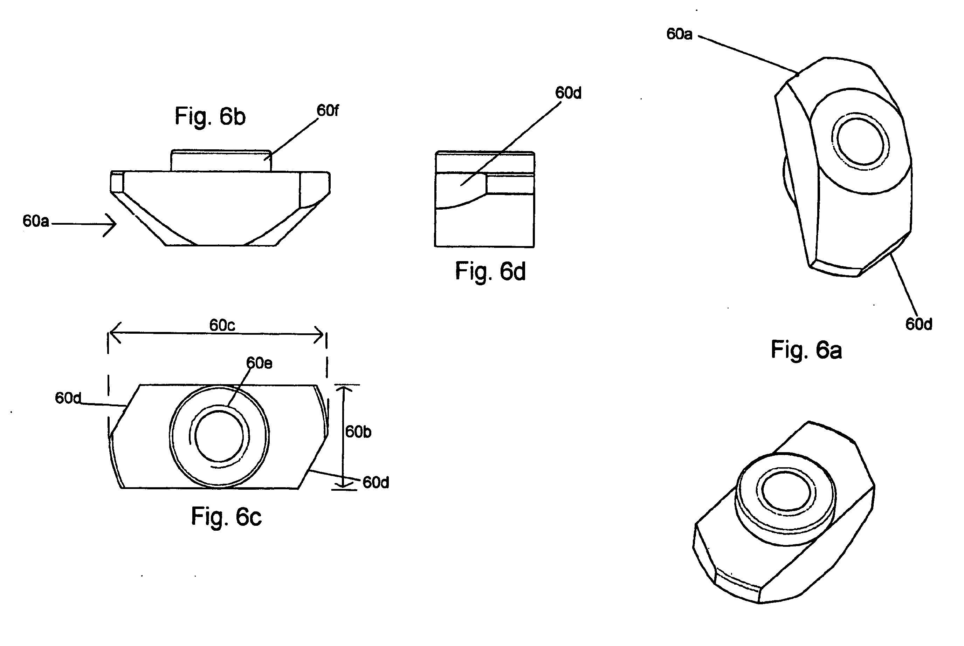

Die entsprechende Nutmutter 60 bzw. 80 passend zum ersten Rahmenprofil 51 bzw. zweiten oder dritten Rahmenprofil 52 ist als Einzelteil in den Fig. 6 dargestellt: Sie besteht aus einem verbreiterten Kopfteil 60a und einem demgegenüber schmaleren, vorzugsweise kreisrunden Schaftteil 60f, dessen Außendurchmesser kleiner ist als die Öffnungsweite 70 der entsprechenden T-Nut 56.

Das verbreiterte Kopfteil 60a ist in der Aufsicht länglich gestaltet, mit einer Breite 60b geringer als die Öffnungsweite 70 der T-Nut 56, so dass die Nutmutter 60 bzw. 80 bei entsprechender Ausrichtung nicht nur von der Stirnseite, sondern auch von der offenen Längsseite her in die T-Nut eingebracht werden kann. Durch Verdrehen der Nutmutter 60 dreht sich deren Kopfteil 60a um maximal ca. 50° in der T-Nut 56, und liegt dann mit den zu diesem Zweck an den einander diagonal gegenüberliegenden beiden Ecken ausgebildeten Abschrägungen 60d an den Seitenflanken der T-Nut an. Durch den Schaftteil 60f und vorzugsweise durch die gesamte Nutmutter hindurch erstreckt sich eine Gewindebohrung 60e, in die eine entsprechende, nicht dargestellte Befestigungsschraube einschraubbar ist. Die Abschrägungen 60d sind an den beiden diagonal einander gegenüberliegenden Ecken ausgebildet, die bei Einschrauben einer Schraube in die Gewindebohrung 60e sich gegen die Längsflanken der T-Nut anlegen.

Dadurch ist es möglich, an jeder beliebigen Stelle einer T-Nut eine bereits auf das Ende einer Befestigungsschraube aufgeschraubte Nutmutter 60 bzw. 80 einzusetzen und durch Festziehen der Befestigungsschraube zu fixieren.

Mit solchen Nutmuttern 60 bzw. 80 können beispielsweise Aufhängehaken 67 an der Oberseite des Profilrahmens 16 befestigt werden, um den gesamten Korpus, oder wenigstens den Innenkorpus 21 mit oder ohne teilweiser Abstandsbeplankung, an einen Kran oder ähnliches zu hängen und an die gewünschte Stelle zu transportieren.

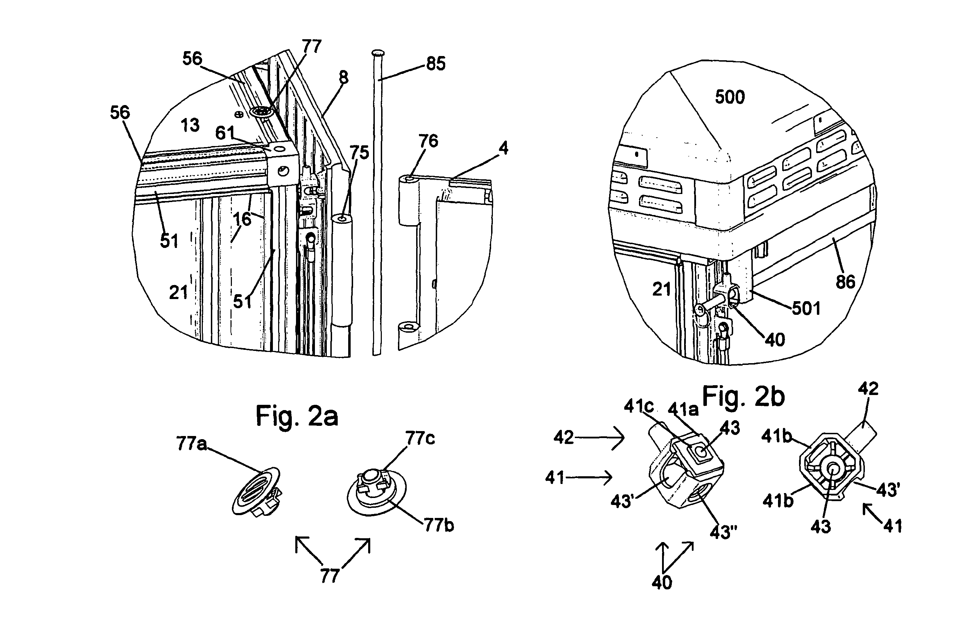

Auch die Außenhalter 40, die außer in der beispielhaften Darstellung der Fig. 1 noch in den Fig. 4a und vor allem den Fig. 2a, 2b dargestellt sind, werden mit Hilfe dieser Nutmuttern 60 bzw. 80 an den Profilen 51 bis 53 befestigt.

Diese Außenhalter 40 dienen primär dem Befestigen des Außenkorpus 22 am Innenkorpus 21:
Der Außenkorpus 22 besteht dabei - je nach Größe - aus unterschiedlich vielen und auch unterschiedlich großen Einzelteilen. Die Fig. 7 bis 12 zeigen eine Gestaltung des Außenkorpus, die sich aus zwei Seitenwänden 8 und einer Rückwand 11 sowie einem Dachmodul 500 zusammensetzt, welches mit zwei Schwenktüren 4a, b komplettiert wird.

Größere Korpusse können beispielsweise mehrere Rückwände nebeneinander aufweisen, und/oder Schiebetüren 14.

Kleinere Korpusse können aus den entsprechenden, jedoch kleineren Einzelteilen bestehen oder auch einen bis auf die Türen und ggf. auch bis auf ein separates Dachmodul einstückigen Außenkorpus aufweisen, bei dem also Rückwand und Seitenwände aus einem Stück bestehen. Unabhängig davon können die Außenhalter 40 zur Befestigung des Außenkorpus verwendet werden, wie sie im unteren Bereich der Fig. 2b als Einzelteile in unterschiedlichen perspektivischen Ansichten dargestellt sind.

Der Grundkörper 41 des Außenhalters 42 ist dabei topfförmig mit einem Boden 41 a und vier umlaufenden Wänden 41 b gestaltet, wobei von einer der Seitenwände und damit parallel zum Boden 41a nach radial außen ein Zapfen 42, der zum seinem freien Ende hin sich etwas konisch verjüngt und einen vorzugsweise runden Querschnitt aufweist, abstrebt. Der Boden 41a weist an seiner Außenseite eine Erhebung 41c auf, die quadratisch ist mit einer Kantenlänge geringfügig kleiner als die Öffnungsweite 70 der T-Nut 56, zu welcher der Außenhalter 40 passen soll. Dementsprechend ist die Außenbreite des Grundkörpers 41 des Außenhalters 40 auch geringer als die Breite des zugehörigen Profils 51.

Der Boden weist in der Mitte, und damit auch in der Mitte der Erhebung 41c, eine Durchgangsöffnung 43 auf, und ebenso die zwei benachbart zum Zapfen 42 liegenden Wände 41b zwei zueinander fluchtende Durchgangsöffnungen 43'. Die dem Zapfen 42 gegenüberliegende Wand 41b weist eine weitere Durchgangsöffnung 43" auf, die zur Aufnahme des Zapfens 42 eines anderen Außenhalters 40 geeignet ist.

Durch diese Gestaltung können die Außenhalter 40 - wie in den Fig. 4a sowie 2a, 2b dargestellt - auf den z. B. Außenseiten der Profile 51 befestigt werden, indem sie mit ihrer Erhebung 43 in der gewünschten Drehlage in die Öffnungsweite 70 der entsprechenden T-Nut eintauchen und entlang dieser vorerst noch in Längsrichtung 50 des Profils verschiebbar sind. Durch Einschrauben einer nicht zu erkennenden Befestigungsschraube in die Durchgangsöffnung 43 in eine in der T-Nut 56 liegende Nutmutter 60 wird der Außenhalter 40 gegenüber dem Profil 51 und damit dem Innenkorpus 21 an der gewünschten Stelle entlang des Profils fixiert, vorzugsweise mit nach oben weisendem Zapfen 42.

Wie Fig. 2a zeigt, kann in analoger Weise ein weiterer Außenhalter 40 an entsprechend höher liegender Position auf der Innenseite, z. B. einer Seitenwand 8 oder auch einer Rückwand 11 verschraubt werden, in dort vorhandenen Befestigungsgewinde. Die höher liegenden Außenhalter 40, vorzugsweise vier, nämlich jeweils in einem Eckbereich der Seitenwand 8, werden dann von oben auf die Zapfen der niedriger liegenden, am Innenkorpus 21 verschraubten Außenhalter 40 gesteckt und dadurch die Außenwand 8 formschlüssig am Innenkorpus 21 befestigt, wie dies auch anhand der Fig. 7 bis 12 erläutert ist.

Fig. 2b zeigt demgegenüber einen weiteren Zweck der Außenhalter 40, vor allem der beiden an den Seiten des Innenkorpus im oberen Bereich angeordneten und horizontal miteinander fluchtenden Außenhalter 40, von denen Fig. 2b nur den vorderen zeigt.

Fig. 2b zeigt nämlich bereits das auf den Innenkorpus aufgesetzte Dachmodul 500, von dem aus Sicherungsfortsätze 501 in einer solchen Position nach unten ragen, dass sie außerhalb des Innenkorpus 21, aber noch innerhalb des - in der Fig. 2b aus Übersichtlichkeitsgründen nicht dargestellten - Außenkorpus 22, also beispielsweise der Seitenwand 8, nach unten ragen bis in den Höhenbereich der oberen Außenhalter 40 hinein, aber mit diesen nicht kollidierend.

In einer definierten Höhe weisen diese Sicherungsfortsätze 501 eine Durchgangsbohrung fluchtend zu den Durchgangsbohrungen der Außenhalter 40 auf.

Das Dachmodul 500 kann daher formschlüssig am Innenkorpus 21 gesichert werden, indem außerhalb beider Seiten des Innenkorpus 21 jeweils eine Sicherungsstange 86 im Zwischenraum zwischen Innenkorpus 21 und Außenkorpus 22 horizontal von vorne her eingeschoben wird und dabei dir Durchgangsöffnungen der Sicherungsfortsätze 501 ebenso wie die Durchgangsbohrungen der damit fluchtenden, mit dem Innenkorpus 21 verschraubten, Außenhalter 40 durchdringt. Dies geschieht bei geöffneten oder entfernten vorderen Türen. Die Länge der Sicherungsstange 86 ist dabei so bemessen, dass bei geschlossenen Türen die Sicherungsstange 86 zuverlässig auch durch die hinten liegenden Durchgangsöffnungen sich hindurch erstreckt. Zum Herausziehen ist am vorderen Ende der Sicherungsstange 86 ein umklappbares Zugelement, beispielsweise ein Ring, befestigt.

In Fig. 2a ist die Sicherungsstange noch nicht durch den dortigen unteren, mit dem Innenkorpus 21 verschraubten, Außenhalter 40 geschoben, da ja in Fig. 2a noch nicht das Dachmodul 500 aufgesetzt ist.

Dagegen zeigt Fig. 2a im oberen Bereich das auf den Korpusrahmen 16 von oben aufgesetzte Schirmblech 13, welches aus einer dünnen Aluminiumplatte besteht, und den Korpusrahmen 16 und damit den gesamten Korpus gegen elektromagnetische Abstrahlung nach außen abdichten soll. Zu diesem Zweck ist das Schirmblech 13 - welches in analoger Weise auch an der Rückseite und den Seiten angeordnet ist - auf eine solche Größe zugeschnitten, dass es auf den umlaufenden Rahmenprofilen 51 aufliegt, aber nicht die Öffnungsweite 70 deren in der Auflagefläche angeordneter T-Nuten 56 bedeckt.

Zum Fixieren des Schirmbleches 13 in dieser Position gegenüber den Profilen 51 werden unterschiedliche Bauteile eingesetzt, beispielsweise die Haltestöpsel 77 der Fig. 2a, die im unteren Bereich als Einzelteil perspektivisch in zwei verschiedenen Lagen dargestellt sind, und im Einbauzustand besser in den Fig. 1a bis c zu erkennen sind: Die Haltestöpsel 77 weisen ein Einsteckteil 77c auf, welches - ähnlich dem Kopfteil der Hutmutter - länglich ausgebildet ist und zum Einsetzen in die T-Nut 56 durch deren Öffnungsweite 70 und anschließendes Verdrehen und dadurch Verklemmen dient. Zu diesem Zweck ist die Länge des Einsteckteiles 77c geringfügig größer als die Breite des hinterschnittenen Teiles der T-Nut 56, so dass sich das in der Regel aus Kunststoff bestehende Teil 77 bei Drehung um 90° darin verklemmt.

Von diesem Einsteckteil 77c ragt ein Schaft durch die Öffnungsweite 70 der T-Nut 56 nach außen und verbindet das Einsteckteil 77c mit dem Kopfteil 77a, der auch einen Abstandshalter 77b entsprechend der Dicke des Schirmbleches 13 aufweist, jedoch über diesen radial vorsteht. Der vorstehende Rand des Kopfteiles 77a liegt somit auf dem Randbereich des Schirmbleches 13 auf und sicher diesen - nach Einsetzen und Verdrehen des Haltestöpsels 77 um 90° in der T-Nut 56 - sicher am Profil 51.

Anstelle dieser nur punktförmigen Befestigungen kann auch eine linienförmige Befestigung der Ränder der Schirmbleche 13 erfolgen, und zwar mit Hilfe von Einsteckprofilen 68, 69, die in Verlaufsrichtung 50 der Profile in die Öffnungsweite 70 deren mittiger Nuten 56 eingerastet werden, und ebenfalls wenigstens eine, vorzugsweise beidseits überstehende Ränder 68c aufweist, die die Randbereiche der Schirmbleche 13 fixieren.

Das Einweg-Einsteckprofil 69 und das demontierbare Einsteckprofil 68 sind im verbauten Zustand in den Fig. 1a bis1c dargestellt, und in Einzeldarstellung in den Fig. 4b und 4c. Das Einweg-Einsteckprofil 69 wird beim Entfernen aus der T Nut 56 verbogen, und kann deshalb nicht wiederverwendet werden, im Gegensatz zum demontierbaren Einweg-Einsteckprofil 68, wie aus der folgenden Erläuterung klar wird:
Beim Einweg-Einsteckprofil 69, welches ein einstückiges, endloses Profil ausgebildet ist und auf die gewünschte Länge geschnitten wird, werden die nach außen überstehenden Ränder 69c durch eine durchgehende Platte gebildet, von der im mittleren Bereich und zueinander beabstandet im rechten Winkel zwei Stegwände als Einsteckteil 69a nach unten ragen in einem solchen Abstand, dass sie gerade noch in die Öffnungsweite 70 der T-Nut 56 passen. Sie verhaken sich dort mittels von den Stegwänden nach außen vorstehender Nasen 69b. Zwischen dem Einsteckteil und dem äußeren Rand ragen weitere Stege weniger weit nach unten, die als Abstandshalter dienen und damit in etwa der Dicke der Schirmbleche 13 entsprechen.

Das demontierbare Einsteck-Profil 68 der Figur 4c ist dagegen hutförmig gestaltet mit einem U-förmigen, nach außen offenen Einsteckteil 68a und den von dort nach außen weisenden Ränder 68c.

Auch das U-förmige Einsteckteil 68a weist nach außen ragende Nasen 68b auf zum Verhaken im Hinterschnitt der T-Nut 56.

Im unbelasteten Zustand ist die Außenbreite des Einsteckteile 68a jedoch so gering, dass das Einsteck-Profil 68 nach oben aus der Öffnungsweite 70 der T-Nut 56 bzw. 56' herausgezogen werden kann, ohne dass sich das Profil 68 nennenswert verbiegt und somit wiederverwendet kann.

Eine zuverlässige Halterung in der T-Nut 56 wird dadurch erreicht, dass von außen in die offene Seite des U-förmigen Einsteckteile 68a eines Spreizschraube 63, vorzugsweise in Form einer einfachen Blechschraube, eingeschraubt wird, nachdem das Einsteck-Profil 68 in die T-Nut 56 gesteckt und positioniert wurde. Dadurch werden die Schenkel des U-förmigen Einsteckteiles 68a auseinandergeborgen und dieses verhakt sich formschlüssig in der T-Nut 56.

Auch der Rand 68c dieses Einsteck-Profil 68 weist einen Abstandshalter 68d auf in Form einer Kröpfung des Randbereiches.

Dabei muss erläutert werden, dass dieser Abstandshalter 68d etwas mehr kompensieren muss als die Dicke des Schirmbleches 13: Für den Korpus 3 und damit speziell den Innenkorpus 21 des Korpus 3 ist eine ausreichende IP-Dichtigkeit (gegen Staub, Schmutz und Spritzwasser) und zusätzlich eine ausreichende elektromagnetische Dichtigkeit notwendig. Dies wird erreicht, indem kombinierte IP- und EMV-Dichtungen zur Abdichtung der Einzelteile des Innenkorpus 21 eingesetzt werden. Auch das einfache Auflegen der Randbereiche der Schirmbleche 13 auf den Profilen 51 bzw. 52 oder 53 ist zur Abdichtung nicht ausreichend.

Stattdessen werden zur Abdichtung unter den entsprechenden Randbereich eines Schirmbleches 13, wie z. B. in Figur 1 a angedeutet, eine zweite kombinierte Dichtung 74 in die Diagonalnut 55 des Profils 51 eingelegt, und zwar nach Möglichkeit so dicht wie möglich umlaufend um den gesamten Umfang des entsprechenden Schirmbleches 13. Die Dichtung 74 ragt dabei geringfügig aus der Diagonalnut 55 nach außen und über den Außenumfang des Profils 51 vor, und wird beim Auflegen des Randbereiches des Schirmbleches 13 elastisch verformt, da sie aus einem meist massiven Gummi- oder Weichkunststoff-Profil besteht, wie dies für konventionelle Dichtungen üblich ist. Die EMV-Dichtigkeit wird erreicht, in dem der Außenumfang der Dichtung 74 mit einem Metallgewebe beschichtet ist, und zwar vorzugsweise der gesamte aus der Diagonalnut 55 herausragende Teil, so dass das Metallgewebe auch noch über den Einsteckteil 74b der Dichtung der elektrischen leitenden Kontakt mit dem metallenen Profil 51 besitzt und natürlich auch mit der daraufaufliegenden metallenen Platte des Schirmbleches 13.

Die in Figur 1 a ebenfalls dargestellte erste kombinierte Dichtung 73 ist ebenfalls über Teile ihres Außenumfanges mit einem solchen metallenen Gewebe als EMV-Dichtung abgedichtet. Sie dient dem IP- und EMV-Dichten anlegen der Türen, und muss deshalb eine höhere Verformbarkeit aufweisen, weshalb deren Einsteckteil 73b ähnlich, nämlich zum Einstecken in Diagonalnut 55, ausgebildet ist, deren Dichtungsteil 73a jedoch größer dimensioniert ist und vor allem ein geschlossenes Hohlprofil aufweist, welches größere Verformungen zulässt.

Die Beschichtung mit Metallgewebe muss sich dabei über einen so großen Teil des Querschnittes der Dichtung 73 erstrecken, dass das Gewebe einerseits Kontakt mit dem Profil 51, vorzugsweise im Bereich dessen Diagonalnut 55, besitzt und andererseits zuverlässig mit der geschlossenen Tür in Kontakt gerät, wenn diese an der Dichtung 73 anliegt.

Figur 4a zeigt ferner eine Sicherungshülse 65, die stirnseitig in die T-Nut 56 einschiebbar, aus deren Öffnungsweite 70 jedoch nicht herausnehmbar ist und dort in einer gewünschten Position über eine Querbohrung 65a mittels Madenschraube verklemmbar ist. Die Sicherungshülse 65 dient zum Einstecken eines (nicht dargestellten) Sicherungsbügels, der in aller Regel ein U-förmig gebogener steifer Drahtbügel ist, der mit seinem einem freien Ende von oben in die Sicherungshülse 65 und mit seinem anderen Ende in eine entsprechende Aufnahmeöffnung der Innenseite der Tür gesteckt werden kann, um die geöffnete Tür gegen ein Zuschlagen durch Wind oder ähnliches zu hindern.

Weiterhin zeigt Figur 5b Drehnasen 64, die über eine radial vorstehende Nase 64a verfügen, sowie über eine Durchgangsbohrung, durch die hindurch sie an einem Bauteil, beispielsweise an einem Schirmblech 13, verschraubt werden können, wobei trotz Verschraubung die Nase 64a der Drehnase 64 noch gedreht werden kann.

Diese Drehnasen 64 werden eingesetzt - wie Figur 5a zeigt - um mittels eines Schirmbleches 13 auch den Bodenbereich des Innenkorpus 21 auf der Außenseite zu beplangen. Zu diesem Zweck werden - gegenüber den Außenkanten des Schirmbleches 13 zurückversetzt - Drehnasen 64 auf der Oberseite des Schirmbleches 13 verschraubt und zunächst die Nasen 64a so gestellt, so dass sie nicht in Richtung Außenkante des Schirmbleches 13 ragen. In dieser Stellung kann das Schirmblech 13 mit den Drehnasen 64 von unten her gegen die Unterseite der entsprechenden Profil 51 des Innenkorpus 21 herangezogen und nach Kontaktierung gesichert werden, indem nun die Nasen 64a in die Stellung nach radial außen bezüglich des Schirmbleches 13 verdreht werden.

Da die Nasen 64a sich in einer entsprechenden Höhe gegenüber der Basisfläche der Drehnasen 64 befinden, greifen sie in die T-Nut 56 des Profils 51 ein, und liegen auf deren unteren Rand auf, wodurch das Schirmblech 13 - in der Regel über eine der kombinierten Dichtungen 74 herbeigeführten, indirekten - Kontakt mit den Profilen 51 gehalten werden.

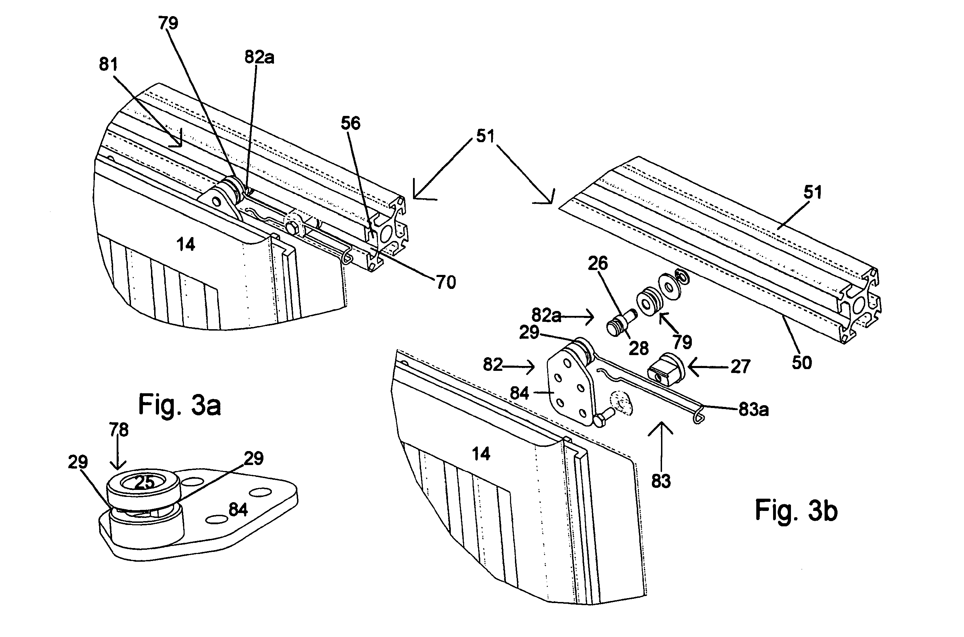

Die Figuren 3 zeigen die Befestigung einer Schiebetür 14 an einem oberen, querlaufenden Rahmen-Profil 51 eines Korpusrahmens 16. Dabei ist nur eine Befestigung dargestellt, jedoch soll bemerkt werden, dass an der Oberkante einer Schiebetür 14 mindestens zwei solcher Schiebetür-Befestigungsteile 81 vorhanden sein müssen, und vorzugsweise auch an deren Unterkante. Dabei sind die Schiebetüren 14 so ausgebildet, dass auch mehrere Schiebetüren 14 nebeneinander angeordnet werden können und sich an ihren gegeneinander kontaktierenden vertikalen Kanten überlappen. Das Schiebetüren-Befestigungsteil 81 umfasst ein Befestigungsteil 82, welches an der Schiebetür 14 befestigt wird, sowie ein Sicherungsteil 83, welches primär am Profil 51 befestigt wird, wie in Figur 3a im montieren Zustand und in Figur 3b in Explosionsdarstellung dargestellt. Das Befestigungsteils 82 besteht aus einer Basisplatte 84, die auf der Innenseite der Schiebetür 14 verschraubt wird, und einem hiervon von der Schiebetür 14 weg in Richtung Profil 51 abragenden Zapfenteil 82, welches mehrteilig ausgebildet ist:
Eine mit einer Durchgangsbohrung versehene Sicherungshülse 78 ist fest mit der Basisplatte 84 verbunden. In die stirnseitig offene Bohrung 25 ist ein Lagerzapfen 26 einsteckbar, auf dem die Führungsrolle 79 drehend gelagert ist. Die Führungsrolle 79 weist in ihrem Umfang eine umlaufene Einkerbung auf, in welche der obere und untere Rand der Öffnungsweite 70 der T-Nut 56 eingreifen, so dass die Führungsrolle 79 quer zur Richtung der T-Nut 56 in dieser formschlüssig gesichert ist, und gegen abziehen von dem Lagerzapfen 26 durch einen Sprengring oder ähnliches gesichert ist.

Die Montage einer Schiebetür selbst an einem umfänglich geschlossenen Korpusrahmen 16 kann damit wie folgt durchgeführt werden:
Ein zusammengebautes Zapfenteil 82a wird mit seiner Führungsrolle 79 zwischen die Randschenkel der T-Nut 56 eingeführt. Dies kann von der offenen Stirnseite des Profils 51 her erfolgen oder - als bevorzugte Lösung - an einer - in den Figuren nicht dargestellten - durch Aufbohren groß genug erweiterten Stelle der Öffnungsweite 70, z. B. nahe des einen Endes eines Profils 51.

In die T-Nut 56 wird weiterhin auch der Sicherungsfuß 27 des Sicherungsteiles 83 eingebracht, der im Hinterschnitt formschlüssig fixiert ist und durch die Öffnungsweite 70 nach außen ragt. Der verdickte Fußteil des Sicherungsfußes 27 füllt dabei zumindest in der Tiefe die T-Nut 56 weites gehend aus, so dass der Sicherungsfuß 27 um ein definiertes Maß nach außen aus der T-Nut 56 vorsteht. Auf der dieser vorderen Stirnseite wird eine in Längsrichtung des Profils 51 verlaufende U-förmigem, an einem Ende offene Sicherungsfeder 83a durch Verschrauben befestigt, die sich dadurch im selben Abstand gegenüber dem Profil 51 im montierten Zustand befindet, wie eine vorzugsweise im Umfang umlaufende Sicherungskerbe 28 in dem gegen die Schiebetür 14 gerichteten Endbereich des Lagerzapfens 26.

An der bewussten Stelle wird nun - nach positionieren des Zapfenteils 82a an der gewünschten Längsposition - der Lagerbolzen 26 in die Sicherungshülse 78, also in deren Bohrung 25, eingeschoben, so befindet sich die Sicherungskerbe 28 des Lagerbolzens 26 an der selben Längsposition, wie eine Federnut 29 im Außenumfang der Sicherungshülse 78. Die Federnut 29 ist an einer Stelle des Umfanges so weit vertieft, dass ein offener Durchgang zur Bohrung 25 und der darunter liegenden Sicherungskerbe 28 des Lagerbolzens 26 besteht.

Durch anschließendes Verschieben des Sicherungsteiles in Verlaufsrichtung 50 des Profils 51 wird die gabelförmige Sicherungsfeder 83a mit ihren Schenkeln beidseits in die Federnut 29 der Sicherungshülse 78 eingeschoben.

Dabei liegt der eine, gerade Schenkel der Sicherungsfeder 83a am abgefrästen Teil der Federnut 29 an und taucht dadurch in die entsprechend dimensionierte, darunter liegenden Sicherungskerbe 28 des inneren Lagerbolzens 26 ein, wodurch dieser am axialen Herausziehen aus der Hülse 78 gehindert wird.

Der andere, gebogene Schenkel der Sicherungsfeder 83a umgreift mit seiner konkaven Wölbung den Außenumfang am Boden der Federnut 29 der Sicherungshülse 78, wodurch sichergestellt wird, dass beim Verschieben des Befestigungsteiles 81 aufgrund Verschiebung der Schiebetür 14 entlang des Profils 51 auch das Sicherungsteil 83 mit verschoben wird, also sich die Sicherungsfeder 83a nicht von dem Zapfenteil 82a löst.

### BEZUGSZEICHENLISTE

- 1: Verteilerschrank
- 2: Sockel
- 2a: Sockelkasten
- 2b: Sockelfuß
- 3: Korpus
- 4a,b: Tür
- 5: Deckel
- 6: Montage-Rahmen
- 7: oberes Zwischenteil
- 8: Seitenwand
- 9: Baugruppenträger
- 10: vertikale Längsrichtung
- 11: Rückwand
- 12: Aufhängeöse
- 13: Schirmblech
- 14: Schiebetür
- 15:
- 16: Korpus-Rahmen
- 17: Kantenprofil
- 18:
- 19:
- 20: Innenkorpus
- 21:
- 22: Außenkorpus
- 23: Frontklappe
- 24: Heckklappe
- 25: Bohrung
- 26: Lagerbolzen
- 27: Sicherungsfuß
- 28: Sicherungskerbe
- 29: Federnut
- 30:
- 31:
- 32:
- 33:
- 34: Querstrebe
- 35:
- 36:
- 37:
- 38:
- 39:
- 40: Außenhalter
- 41: Grundkörper
- 41a: Boden
- 41b: Wand
- 41c: Erhebung
- 42: Zapfen
- 43, 43', 43": Durchgangsöffnung
- 44:
- 45:
- 46:
- 47:
- 48:
- 49:
- 50: Verlaufsrichtung Profil
- 51: erstes Rahmenprofil
- 52: zweites Rahmenprofil
- 53: drittes Rahmenprofil
- 54, 54': Zentralbohrung
- 55, 55': Diagonalnut
- 56, 56': T-Nut
- 57: plattenförmiger Fortsatz
- 58: erste Dübelbuchse
- 58a: Außengewinde
- 58b: Innengewinde
- 59: zweite Dübelbuchse
- 60, 80: schwenkbare erste/zweite Nutmutter
- 60a: Kopfteil
- 60b: Breite
- 60c: Länge
- 60d: Abschrägung
- 60e: Gewindebohrung
- 60f: Schafteil
- 61: erster Würfelverbinder
- 62: zweiter Würfelverbinder
- 63: Spreizschraube
- 64: Drehnase
- 64a: Nase
- 65: Sicherungshülse
- 65a: Querbohrung
- 66: Durchgangsöffnung
- 67: Aufhängehaken
- 68: demontierbares Einsteckprofil
- 68a: Einsteckteil
- 68b: Nase
- 68c: Rand
- 68d: Abstandshalter
- 68e: Fortsatz
- 69: Einweg-Einsteckprofil
- 69a: Einsteckteil
- 69b: Nase
- 69c: Rand
- 69d: Abstandshalter
- 69e: Fortsatz
- 70: Öffnungsweite
- 71: erster Winkelverbinder
- 71a,b: Schenkel
- 71c: Stegwand
- 71d: Durchgangsbohrung
- 71e: Erhebung
- 72: zweiter Winkelverbinder
- 72a,b: Schenkel
- 72c: Stegwand
- 72d: Durchgangsbohrung
- 72e: Erhebung
- 73: erste kombinierte Dichtung
- 74: zweite kombinierte Dichtung
- 74a: Dichtungsteil
- 74b: Einsteckteil
- 75, 76: Scharnierbohrung
- 77: Haltestöpsel
- 77a: Kopfteil
- 77b: Abstandshalter
- 77c: Einsteckteil
- 78: Sicherungshülse
- 79: Führungsrolle
- 80: zweite Nutmutter
- 81: Schiebetüren-Befestigungsteil
- 82: Befestigungsteil
- 82a: Zapfenteil
- 83: Sicherungsteil
- 83a: Sicherungsfeder
- 84: Basisplatte
- 85: Scharnierstange
- 85a: Flansch
- 86: Sicherungsstange
- 500: Dachmodul
- 501: Sicherungsfortsatz
- 502: Rand

## Patentansprüche

1. Bausatz zum Erstellen des Korpus (3) von verschieden großen Verteilerschränken (1), die
einen Innenkorpus (21),
einen Außenkorpus (22) und
wenigstens eine Tür (4) umfassen, wobei der Außenkorpus (22) und die wenigstens eine Tür aus Kunststoff bestehen, und
wobei der Innenkorpus (21) einen Korpusrahmen (16) umfasst, der ein erstes Rahmenprofil (51) und einen zu dem ersten Rahmenprofil passenden ersten Würfelverbinder (61) umfasst,
**dadurch gekennzeichnet, dass**
ein in die Außenfläche des ersten Rahmenprofiles (51) einsetzbares demontierbares Einsteckprofil (68) und/oder ein in die Außenfläche des ersten Rahmenprofiles (51) einsetzbares Einweg-Einsteckprofil (69) jeweils als Befestigungsteil für eine Außenbeplankung des Korpusrahmens (16) mit Schirmblechen (13) vorgesehen sind.

2. Bausatz nach Anspruch 1, **dadurch gekennzeichnet, dass**
das erste Rahmenprofil (51) in wenigstens einer seiner Außenflächen eine hinterschnittene T-Nut (56) aufweist und die Einsteckprofile (68, 69) ein Einsteckteil (68a bzw. 69a) zum Stecken in die T-Nut (56) des ersten Rahmenprofiles (51) aufweisen, welches insbesondere nach außen vorstehende Nasen (68b, 69b) zum formschlüssigen Hintergreifen des Hinterschnitts der T-Nut (56) aufweisen, sowie einen beidseits über das Einsteckteil (68a, 69a) seitlich überstehenden, plattenförmigen Rand (68c, 69c).

3. Bausatz nach einem der vorhergehenden Ansprüche, **dadurch gekennzeichnet, dass**
das erste Rahmenprofil (51) in wenigstens einer Außenecke seines Querschnitts eine Diagonalnut (55) umfasst, die insbesondere ebenfalls hinterschnitten ist und nach diagonal außen offen ist.

4. Bausatz nach einem der vorhergehenden Ansprüche, **dadurch gekennzeichnet, dass**
der Rand (68c, 69c) zwischen seiner freien Außenkante und dem Einsteckteil (68a bzw. 69a) einen Abstandshalter (68d bzw. 69d) aufweist entsprechend der Dicke der Schirmbleche (13) und die Breite des Einsteckprofils (68, 69) kleiner ist als die Breite des ersten Rahmenprofils (51), insbesondere kleiner als die Breite zwischen zwei benachbarten Diagonalnuten (55) des ersten Rahmenprofils (51).

5. Bausatz nach einem der vorhergehenden Ansprüche, **dadurch gekennzeichnet, dass**
das Einweg-Einsteckprofil (69) eine von der einen zur anderen Außenkante durchgehende Platte umfasst, deren Randbereich auch den Rand (69c) bildet, und das Einsteckteil (69a) insbesondere aus zwei beabstandeten, einzelnen, einstückig mit dem Rest ausgebildeten Stegwänden besteht.

6. Bausatz nach einem der vorhergehenden Ansprüche, **dadurch gekennzeichnet, dass**
eine erste kombinierte Dichtung (73) mit im Wesentlichen rechteckigem, massivem Querschnitt und mit einem etwa rechteckigen Einsteckteil (73b) und/oder eine zweite kombinierte Dichtung (74) mit einem hohlen, schlauchförmigen Dichtungsteil (74a) und einem massiven, etwa rechteckigen Einsteckteil (74b) zum Einstecken in eine der Diagonalnuten (55) des ersten Rahmenprofils (51) vorgesehen sind.

7. Bausatz nach einem der vorhergehenden Ansprüche, **dadurch gekennzeichnet, dass**
die erste kombinierte Dichtung (73) und/oder die zweite kombinierte Dichtung (74) zum Abdichten des Innenkorpus gegen Feuchtigkeit/Staub einerseits und EMV-Abstrahlung andererseits zwischen dem ersten Rahmenprofil und den Schirmblechen anordenbar sind.

8. Bausatz nach einem der vorhergehenden Ansprüche, **dadurch gekennzeichnet, dass**
Außenhalter (40) zum Befestigen des Außenkorpus an dem Innenkorpus vorgesehen sind, wobei die Außenhalter im Wesentlichen würfelförmig mit einem nach außen abragenden Zapfen (42) ausgebildet sind und die Außenhalter (40) mit nach oben ragendem Zapfen (42) an den Außenflächen des ersten Rahmenprofils (51) an einer Außenseite des Korpusrahmens (16) befestigbar sind, um entsprechende vertikale Aufnahmeöffnungen einer Abstandbeplankung auf die Zapfen (42) zu hängen.

9. Bausatz nach einem der vorhergehenden Ansprüche, **dadurch gekennzeichnet, dass**
der Außenhalter (40) einen Grundkörper (41), etwa in Form eines hohlen Würfels mit fehlendem Deckel, aufweist und der Zapfen von einer Seitenwand des Grundkörpers (41) rechtwinklig nach außen absteht, wobei der Zapfen (42) insbesondere massiv, insbesondere leicht konisch sich nach außen verjüngend ausgebildet ist, und
wobei in der dem Zapfen (42) gegenüberliegenden Seitenwand (41b) des Außenhalters (40) eine Durchgangsöffnung (43") zur Aufnahme eines Zapfens (42) eines darunter liegenden, nächsten Außenhalters (40) vorgesehen ist.

10. Bausatz nach einem der vorhergehenden Ansprüche, **dadurch gekennzeichnet, dass**
sowohl ein Boden (41a) eine Durchgangsöffnung (43) als auch die Wände (41b) Durchgangsöffnungen (43') bzw. (43") aufweisen, wobei in den beiden zu dem Zapfen (42) benachbarten Wänden des Grundkörpers (41) einander gegenüberliegende, miteinander fluchtende Durchgangsöffnungen (43') ausgebildet sind.

11. Bausatz nach einem der vorhergehenden Ansprüche, **dadurch gekennzeichnet, dass**
der Boden (41a) des Grundkörpers (41) des Außenhalters (40) eine nach außen gerichtete, vorzugsweise quadratische, Erhebung (41 c) aufweist, dessen Kantenlänge geringfügig kleiner ist als die Öffnungsweite der T-Nut (56, 56').

12. Bausatz nach einem der vorhergehenden Ansprüche, **dadurch gekennzeichnet, dass**
Innenflächen der Seitenwand (8) und/oder der Rückwand (11) des Außenkorpus (22) Befestigungsflächen mit Sacklochbohrungen zum Ansetzen und Verschrauben eines Außenhalters (40) mit seinem Boden (41a) gegen die Seitenwand (8) bzw. die Rückwand (11) aufweisen.

13. Bausatz nach einem der vorhergehenden Ansprüche, **gekennzeichnet durch** eine Sicherungsstange (86) zum Sichern eines Dachmoduls (500) des Außenkorpus (22) am Korpusrahmen (16) des Innenkorpus (21) mittels eines Hindurchschiebens **durch** die Durchgangsöffnungen (43') zweier auf gleicher Höhe angeordneter, von den Seitenflächen des Korpusrahmens (16) und dessen Kantenprofilen (17) nach außen ragender Außenhalter (40) und mittels des Hindurchschiebens **durch** Sicherungsfortsätze (501) des Dachmoduls (500), die vom Dachmodul (500) aus vertikal nach unten zwischen den Korpusrahmen (16) und die Seitenwände (8) des Außenkorpus (22) ragen, wobei die Sicherungsfortsätze (501) ebenfalls mit den Durchgangsöffnungen (43') der Außenhalter (40) fluchtende, Durchgangsöffnungen aufweisen.

14. Bausatz nach einem der vorhergehenden Ansprüche, **dadurch gekennzeichnet, dass**
das Dachmodul (500) einen außen nach unten ragenden Rand (502) aufweist, der soweit außen positioniert ist, dass er die Oberkante der Seitenwände (8) und der Rückwand (11) übergreift.

15. Bausatz nach einem der vorhergehenden Ansprüche, **dadurch gekennzeichnet, dass**
der Korpusrahmen (16) aus Metall ein kubischer Rahmen mit Kantenprofilen (17) entlang der Außenkanten des Kubus ist, wenigstens entlang der Außenkanten der Seitenflächen des Kubus, insbesondere entlang aller Außenkanten des Kubus, insbesondere mit zusätzlichen Querstreben (34) im Verlauf der Außenflächen des Kubus, wobei die Kantenprofile (17) aus dem ersten Rahmenprofil (51) bestehen, die an den Ecken des Kubus über die ersten Würfelverbinder (61) miteinander verbunden sind, an denen sie mit ihren Stirnseiten anliegen und fixiert sind.

16. Bausatz nach einem der vorhergehenden Ansprüche, **dadurch gekennzeichnet, dass**
das demontierbare Einsteckprofil (68) im Wesentlichen nutförmig ausgebildet ist mit einem u-förmigen, nach außen offenen Einsteckteil (68a) und von dessen freien Enden quer nach außen abragenden Rändern (68c), wobei das u-förmige Einsteckteil (68a) nahe seines offenen Endes nach innen vorstehende Fortsätze (68e) aufweist und im unbelasteten Zustand insbesondere die äußere Breite des Einsteckteiles (68a) geringer ist als die Öffnungsweite der T-Nut (56).

17. Bausatz nach einem der vorhergehenden Ansprüche, **gekennzeichnet durch** ein zweites Rahmenprofil (52),
wobei das zweite Rahmenprofil (52) analog zum ersten Rahmenprofil (51) ausgebildet ist, jedoch mit demgegenüber verkleinerten Außenabmessungen und
einen zweiten Würfelverbinder (62),
wobei der zweite Würfelverbinder (62) analog zum ersten Würfelverbinder (61) ausgebildet ist, jedoch mit einer Kantenlänge gleich oder kleiner der Breite des zweiten Rahmenprofils (52).

18. Bausatz nach einem der vorangehenden Ansprüche, **dadurch gekennzeichnet, dass**
wenigstens ein Teil des Außenquerschnittes des Dichtungsteils (73a, 74a) mit einer elektrisch leitenden, vorzugsweise metallischen, Beschichtung, insbesondere einem metallischen Gewebe (75) beschichtet ist, welches sich auf wenigstens einer Seite, bei der ersten kombinierten Dichtung (73) insbesondere auf beiden Seiten bis in den Bereich des Einsteckteiles (73b, 74b) erstreckt, so dass beim Einstecken der Dichtungen in eine dieser Diagonalnuten (55, 55') das metallische Gewebe (75) Kontakt mit dem Rahmenprofil (51, 52, 53) erhält.

19. Bausatz nach einem der vorhergehenden Ansprüche, **gekennzeichnet durch** einen Haltestöpsel (77), insbesondere aus Kunststoff, zum Einsetzen und Verriegeln **durch** 90°-Drehung in einer der T-Nuten (56) des ersten oder zweiten Rahmenprofils (51 oder 52),
wobei
der Haltestöpsel (77) ein verbreitertes Kopfteil (77a) zum Übergreifen und insbesondere Halten des Randes insbesondere eines Schirmbleches (13) aufweist sowie einen Abstandshalter (77b) entsprechend der Dicke des Schirmbleches (13) und einen Einsteckteil (c) mit in der Aufsicht länglicher Form zum Einstecken in eine der T-Nuten (56, 56') von außen und formschlüssigem Verriegeln darin nach Drehung um ca. 90°,
wobei die Außenenden des Einsteckteiles bogenförmig gerundet sind und die Länge des Einsteckteiles geringfügig größer ist als die Breite der T-Nut (56 bzw. 56').

20. Bausatz nach einem der vorhergehenden Ansprüche, **gekennzeichnet durch** Drehnasen (64) zur Verschraubung an Schirmblechen mit wenigstens einer seitlich überstehenden Nase (64a) zum Eindrehen in die T-Nut (56) des ersten Rahmenprofiles (51), wobei insbesondere der Höhenabstand der Nase (64a) gegenüber der Basisfläche der Drehnase (64) dem Abstand von der Außenkante des Profiles (51, 52, 53) bis zu dessen T-Nut (56, 56') entspricht, und insbesondere
der untere Teil der Nase (64) einen Sechskant-Außenumfang entsprechend eines Sechskant-Schraubenkopfes aufweist und insbesondere die Drehnase (64) eine Durchgangsbohrung mit erweitertem Bereich auf der Oberseite aufweist zum Durchstecken einer Befestigungsschraube gegenüber z. B. dem Schirmblech (13).

21. Verfahren zur Herstellung von Verteilerschränken mit einem Innenkorpus (21), in Form eines Korpusrahmens (16) aus Metall, und einem Außenkorpus in Form einer Abstandsbeplankung und wenigstens einer Tür (4) aus Kunststoff,
**dadurch gekennzeichnet, dass**
ein Korpusrahmen (16), wenigstens in Form zweier miteinander verbundener Rahmen-Seitenteile, insbesondere in Form eines quaderförmigen Rahmens, aus abgelängten Rahmenprofilen (51, 52, 53) entlang der Kanten erstellt wird mittels Würfelverbindern (61, 62), die mit den passend abgelängten RahmenProfilen (51-53) verschraubt werden,
am Innenkorpus (21) die Abstandsbeplankung des Außenkorpus (22) in Form von Seitenwänden (8) und wenigstens einer Rückwand (11) durch Einhängen von oben befestigt wird, und
an den Vorderkanten der Seitenwände (8) des Außenkorpus (22) die Tür (4) angelenkt wird,
wobei vor dem Aufbringen der Abstandsbeplankung der Innenkorpus (21) zumindest teilweise mit einer Außenbeplankung in Form von Schirmblechen (13) EMV-dicht verschlossen wird, indem Schrimbleche (13) auf die Außenfläche des Korpusrahmens (16) gelegt und dort mittels in T-Nuten (56, 56') der Rahmenprofile (51 - 53) eingesteckte, den Rand der Schirmbleche (13) übergreifende, Einsteckprofile (68, 69) fixiert wird.

22. Verfahren nach Anspruch 21, **dadurch gekennzeichnet, dass**
bei einem mehrteiligen Außenkorpus (22) dessen Abstandsbeplankung durch Aufsetzen eines Dachmoduls (500) auf dem Innenkorpus (21) und dessen Übergreifen über den oberen Rand der Rückwand (11) und Seitenwände (8) die Abstandsbeplankung gesichert wird durch formschlüssige Verbindung des Dachmoduls mit dem Innenkorpus, wobei
die Sicherung durch horizontales Einschieben von jeweils einer Sicherungsstange (86) bei geöffneter oder abgenommener Fronttür in den Zwischenraum zwischen Innenkorpus (21) und Außenkorpus (22) durch Öffnungen sowohl des Dachmoduls (500) als auch des Innenkorpus (21) hindurch erfolgt.

23. Verfahren nach Anspruch 21 oder 22, **dadurch gekennzeichnet, dass**
vor dem Fixieren der Schirmbleche (13) eine zweite kombinierte Dichtung (74) in die Diagonalnuten (55, 55') der Profile (51 - 53) im Bereich der Schirmbleche und um diese umlaufend eingesetzt werden, so dass die Schirmbleche (13) ebenfalls auf diesen zweiten kombinierten Dichtungen (74) aufliegen.

24. Verfahren nach einem der Ansprüche 21 bis 23, **dadurch gekennzeichnet, dass**
ein Schirmblech (13) zum Verschließen des Bodens mit Haltenasen (64) auf der Oberseite im Abstand innerhalb des Korpusrahmens (16) ausgestattet und das Schirmblech (13) von unten her gegen die horizontal umlaufenden Profile (51 - 53) mit Hilfe der Drehnasen gehoben und durch Drehen der Drehnasen formschlüssig mit dem Profilrahmen (16) verbunden wird, indem die Nasen (64a) der Drehnasen (64) in die nach innen gerichtete T-Nut (56, 56') formschlüssig eingreifen.

25. Verfahren nach einem der Ansprüche 21 bis 24, **dadurch gekennzeichnet, dass**
das Einhängen der Seitenwände (8) und Rückwand (11) erfolgt durch Verschrauben von vier Außenhaltern (40) mit nach oben gerichtetem Zapfen (42) an den Innenseiten der Rückwand bzw. Seitenwand in deren Eckbereichen und Einhängen mit der unteren Durchgangsöffnung (43"') dieser Außenhalter (40) auf den nach oben gerichteten Zapfen darunter befindlicher jeweiliger identischer Außenhalter (40), die auf den Außenflächen des Profilrahmens (16) des Innenkorpus (21) an entsprechender Position fixiert sind.

## Claims

1. Construction kit for creating the body (3) of distribution cabinets (1) of different sizes, which comprise
an inner body (21),
an outer body (22), and
at least one door (4), the outer body (22) and the at least one door consisting of plastic, and
the inner body (21) comprising a body frame (16), which comprises a first frame profile (51) and a first cubic connector (61), matching the first frame profile,
**characterized in that**
a removable insert profile (68), which can be inserted into the outer surface of the first frame profile (51), and/or a disposable insert profile (69), which can be inserted into the outer surface of the first frame profile (51), are respectively provided as a fastening part for an outer paneling of the body frame (16) with shielding plates (13).

2. Construction kit according to Claim 1, **characterized in that** the first frame profile (51) has in at least one of its outer surfaces an undercut T-groove (56) and the insert profiles (68, 69) have an insert part (68a and 69a, respectively) for inserting into the T-groove (56) of the first frame profile (51), which has in particular outwardly protruding lugs (68b, 69b) for engaging positively behind the undercut of the T-groove (56), and also a plate-shaped border (68c, 69c), extending laterally beyond the insert part (68a, 69a) on both sides.

3. Construction kit according to one of the preceding claims, **characterized in that** the first frame profile (51) comprises in at least one outer corner of its cross section a diagonal groove (55), which is in particular likewise undercut and open diagonally outward.

4. Construction kit according to Claim 10, **characterized in that** the border (68c, 69c) has between its free outer edge and the insert part (68a or 69a) a spacer (68d and 69d, respectively), corresponding to the thickness of the shielding plates (13), and the width of the insert profile (68, 69) is smaller than the width of the first frame profile (51), in particular smaller than the width between two neighboring diagonal grooves (55) of the first frame profile (51).

5. Construction kit according to one of the preceding claims, **characterized in that** the disposable insert profile (69) comprises a plate which extends through from one outer edge to the other and the border regions of which also form the border (69c), and the insert part (69a) comprises in particular two spaced-apart, individual web walls formed integrally with the rest.

6. Construction kit according to one of the preceding claims, **characterized in that** a first combined seal (73) with a substantially rectangular, solid cross section and with an approximately rectangular insert part (73b) and/or a second combined seal (74) with a hollow, tubular seal part (74a) and a solid, approximately rectangular insert part (74b) for insertion into one of the diagonal grooves (55) of the first frame profile (51) are provided.

7. Construction kit according to one of the preceding claims,
**characterized in that**
the first combined seal (73) and/or the second combined seal (74) for sealing the inner body against moisture/dust on the one hand and EMC radiation on the other hand can be arranged between the first frame profile and the shielding plates.

8. Construction kit according to one of the preceding claims,
**characterized in that**
outer retainers (40) for fastening the outer body on the inner body are provided, the outer retainers being formed substantially in the form of a cube with an outwardly protruding pin (42) and it being possible for the outer retainers (40) to be fastened with upwardly protruding pin (42) on the outer surfaces of the first frame profile (51) on an outer side of the body frame (16), in order to hang corresponding vertical receiving openings of a spaced paneling on the pins (42).

9. Construction kit according to one of the preceding claims,
**characterized in that**
the outer retainer (40) has a basic body (41), approximately in the form of a hollow cube with a missing top, and the pin protrudes outward at right angles from a side wall of the basic body (41), the pin (42) being formed in particular as a solid pin, in particular slightly tapering conically outward, and
a through-opening (43") for receiving a pin (42) of a next outer retainer (40), lying thereunder, being provided in the side wall (41b) of the outer retainer (40) opposite the pin (42).

10. Construction kit according to one of the preceding claims, **characterized in that** both a bottom (41a) has a through-opening (43) and the walls (41b) have through-openings (43') and (43"), respectively, mutually opposite through-openings (43') in line with one another being formed in the two walls of the basic body (41) neighbouring the pin (42).

11. Construction kit according to one of the preceding claims, **characterized in that** the bottom (41a) of the basic body (41) of the outer retainer (40) has an outwardly directed, preferably square, elevation (41c), the edge length of which is slightly smaller than the opening width of the T-groove (56, 56').

12. Construction kit according to one of the preceding claims, **characterized in that** inner surfaces of the side wall (8) and/or of the rear wall (11) of the outer body (22) have fastening surfaces with blind-hole bores for attaching and screwing an outer retainer (40) by its bottom (41a) against the side wall (8) or the rear wall (11).

13. Construction kit according to one of the preceding claims, **characterized by** a securing bar (86) for securing a roof module (500) of the outer body (22) on the body frame (16) of the inner body (21) by means of pushing through the through-openings (43') of two outer retainers (40), which are arranged at the same height and protrude outward from the side surfaces of the body frame (16) and its edge profiles (17), and by means of pushing through securing continuations (501) of the roof module (500), which protrude vertically downward from the roof module (500) between the body frame (16) and the side walls (8) of the outer body (22), the securing continuations (501) likewise having through-openings in line with the through-openings (43') of the outer retainer (40).

14. Construction kit according to one of the preceding claims, **characterized in that** the roof module (500) has a border (502) protruding outward and downward, which is positioned to the outside to such an extent that it engages over the upper edge of the side walls (8) and of the rear wall (11).

15. Construction kit according to one of the preceding claims, **characterized in that** the metal body frame (16) is a cubic frame with edge profiles (17) along the outer edges of the cube, at least along the outer edges of the side surfaces of the cube, in particular along all the outer edges of the cube, in particular with additional cross struts (34) in the path of the outer surfaces of the cube, the edge profiles (17) comprising the first frame profile (51), which are interconnected at the corners of the cube by means of the first cubic connectors (61), against which they rest with their end faces and on which they are fixed.

16. Construction kit according to one of the preceding claims, **characterized in that** the removable insert profile (68) is formed substantially in a groove-shaped manner, with a U-shaped, outwardly open insert part (68a) and borders (68c) protruding transversely outward from the free ends of the latter, the U-shaped insert part (68a) having near its open end inwardly projecting continuations (68e) and, in the unloaded state, the outer width of the insert part (68a) in particular being smaller than the opening width of the T-groove (56).

17. Construction kit according to one of the preceding claims, **characterized by** a second frame profile (52), the second frame profile (52) being formed in a manner analogous to that of the first frame profile (51), but with reduced outside dimensions in comparison, and a second cubic connector (62), the second cubic connector (62) being formed in a manner analogous to that of the first cubic connector (61), but with an edge length equal to or smaller than the width of the second frame profile (52).

18. Construction kit according to one of the preceding claims, **characterized in that** at least part of the outer cross section of the seal part (73a, 74a) is coated with an electrically conducting, preferably metallic, coating, in particular a metal gauze (75), which extends on at least one side, in the case of the first combined seal (73) in particular on both sides, into the region of the insert part (73b, 74b), so that the metal gauze (75) makes contact with the frame profile (51, 52, 53) on insertion of the seals into one of these diagonal grooves (55, 55').

19. Construction kit according to one of the preceding claims, **characterized by** a retaining stopper (77), in particular made of plastic, for insertion and locking by turning 90° in one of the T-grooves (56) of the first or second frame profile (51 or 52), the retaining stopper (77) having a widened head part (77a) for engaging over, and in particular retaining, the border, in particular of a shielding plate (13), and also a spacer (77b) corresponding to the thickness of the shielding plate (13) and an insert part (77c) with an elongate form in plan view for insertion into one of the T-grooves (56, 56') from outside and positive locking therein after turning by about 90°, the outer ends of the insert part being arcuately rounded and the length of the insert part is slightly greater than the width of the T-groove (56 or 56').

20. Construction kit according to one of the preceding claims, **characterized by** rotary lugs (64) for screwing on shielding plates with at least one laterally projecting lug (64a) for screwing into the T-groove (56) of the first frame profile (51), with in particular the vertical distance of the lug (64a) from the base area of the rotary lug (64) corresponding to the distance from the outer edge of the profile (51, 52, 53) to its T-groove (56, 56'), and, in particular, the lower part of the lug (64) has a hexagonal outer circumference corresponding to a hexagonal screw head and, in particular, the rotary lug (64) has a through-bore with a widened region on the upper side, for inserting through a fastening screw with respect to the shielding plate (13) for example.

21. Method for producing distribution cabinets with an inner body (21), in the form of a metal body frame (16), and an outer body, in the form of spaced paneling, and at least one plastic door (4),
**characterized in that**
a body frame (16), at least in the form of two interconnected frame side parts, in particular in the form of a square frame, is created from cut-to-length frame profiles (51, 52, 53) along the edges by means of cubic connectors (61, 62), which are screwed to the suitably cut-to-length frame profiles (51-53),
the spaced paneling of the outer body (22) in the form of side walls (8) and at least one rear wall (11) is fastened to the inner body (21) by hanging from above and
the door (4) is connected to the front edges of the side walls (8) of the outer body (22), the inner body (21) being sealed to meet EMC requirements at least partially with outer paneling in the form of shielding plates (13) before the spaced paneling is applied, **in that** shielding plates (13) are placed onto the outer surface of the body frame (16) and fixed there by means of insert profiles (68, 69) inserted into T-grooves (56, 56') of the frame profiles (51 - 53) and engaging over the border of the shielding plates (13).

22. Method according to Claim 21, **characterized in that**, in the case of a multi-part outer body (22), its spaced paneling is created by a roof module (500) being placed on the inner body (21) and engaging over the upper border of the rear wall (11) and side walls (8) and the spaced paneling is secured by positive connection of the roof module to the inner body, the securement taking place by a securing bar (86) being respectively pushed in horizontally, with the front door open or removed, in the intermediate space between the inner body (21) and the outer body (22) through openings both of the roof module (500) and of the inner body (21).

23. Method according to Claim 21 or 22, **characterized in that**, before the shielding plates (13) are fixed, a second combined seal (74) is inserted into the diagonal grooves (55, 55') of the profiles (51 - 53) in the region of the shielding plates and running around the latter, so that the shielding plates (13) likewise rest on these second combined seals (74).

24. Method according to one of Claims 21 to 23, **characterized in that** a shielding plate (13) for closing the bottom is provided with retaining lugs (64) spaced apart on the upper side within the body frame (16) and the shielding plate (13) is lifted from below against the profiles (51 - 53) running horizontally around the periphery with the aid of the rotary lugs and, by turning the rotary lugs, is positively connected to the profile frame (16) **in that** the lugs (64a) of the rotary lugs (64) positively engage in the inwardly directed T-groove (56, 56').

25. Method according to one of the preceding Claims 21 to 24, **characterized in that** the hanging of the side walls (8) and rear wall (11) takes place by screwing four outer retainers (40) with upwardly directed pins (42) to the inner sides of the rear wall or side wall in their corner regions and hanging these outer retainers (40) by the lower through-opening (43"') on the upwardly directed pins of respective identical outer retainers (40) located thereunder, which are fixed in the corresponding position on the outer surfaces of the profile frame (16) of the inner body (21).

## Revendications

1. Kit de réalisation du corps (3) d'armoires de distribution de tailles différentes (1) comprenant
un corps interne (21),
un corps externe (22) et
au moins une porte (4), le corps externe (22) et l'au moins une porte étant composés de matière plastique et
le corps interne (21) comprenant un châssis de corps (16) englobant un premier profilé de châssis (51) et un premier connecteur cubique adapté au premier profilé de châssis (61),
**caractérisé en ce que**
un profilé d'insertion démontable (68) pouvant être inséré dans la surface extérieure du premier profilé de châssis (51) et/ou un profilé d'insertion à sens unique (69) pouvant être inséré dans la surface extérieure du premier profilé de châssis (51) sont respectivement prévus comme pièce de fixation pour un placage extérieur du châssis de corps (16) comportant des écrans de tôle (13).

2. Kit selon la revendication 1, **caractérisé en ce que**
le premier profilé de châssis (51) présente dans au moins une de ses surfaces extérieures une rainure en T à contre-dépouille (56) et que les profilés d'insertion (68, 69) comprennent une pièce d'insertion (68a ou 69a) à ficher dans la rainure en T (56) du premier profilé de châssis (51), qui comporte notamment des becs saillant vers l'extérieur (68b, 69b) pour maintenir par l'arrière en correspondance géométrique la contre-dépouille de la rainure en T (56) ainsi qu'un bord en forme de plaque (68c, 69c) débordant des deux côtés de la pièce d'insertion (68a, 69a).

3. Kit selon une des revendications précédentes, **caractérisé en ce que**
le premier profilé de châssis (51) comporte, dans au moins un coin extérieur de sa section transversale, une rainure diagonale (55) qui présente notamment également une contre-dépouille et s'ouvre en diagonale vers l'extérieur.

4. Kit selon une des revendications précédentes, **caractérisé en ce que**
le bord (68c, 69c) présente entre son arête extérieure libre et la pièce d'insertion (68a ou 69a) un écarteur (68d ou 69d) en fonction de l'épaisseur des écrans de tôle (13) et que la largeur du profilé d'insertion (68, 69) est inférieure à la largeur du premier profilé de châssis (51), notamment inférieure à la largeur entre deux rainures diagonales (55) voisines l'une de l'autre du premier profilé de châssis (51).

5. Kit selon une des revendications précédentes, **caractérisé en ce que**
le profilé d'insertion à sens unique (69) comprend une plaque continue d'une arête extérieure à l'autre et dont la périphérie constitue aussi le bord (69c) et que la pièce d'insertion (69a) est composée notamment de deux parois traversantes distinctes espacées réalisées en un bloc avec le reste.

6. Kit selon une des revendications précédentes, **caractérisé en ce que**
il est prévu un premier joint combiné (73) comportant une section transversale massive sensiblement rectangulaire et une pièce d'insertion approximativement rectangulaire (73b) et/ou un deuxième joint combiné (74) comportant une pièce d'étanchéité creuse de forme tubulaire (74a) et une pièce d'insertion massive approximativement rectangulaire (74b) à insérer dans une des rainures diagonales (55) du premier profilé de châssis (51).

7. Kit selon une des revendications précédentes, **caractérisé en ce que**
le premier joint combiné (73) et/ou le deuxième joint combiné (74) permettant d'étanchéifier le corps interne contre l'humidité/la poussière d'une part et le rayonnement électromagnétique d'autre part peuvent être disposés entre le premier profilé de châssis et les écrans de tôle.

8. Kit selon une des revendications précédentes, **caractérisé en ce que**
il est prévu des supports extérieurs (40) pour fixer le corps externe au corps interne, les supports extérieurs étant réalisés sensiblement en forme de cubes avec un tourillon saillant vers l'extérieur (42) et que les supports extérieurs (40) peuvent être fixés aux surfaces extérieures du premier profilé de châssis (51) par un tourillon saillant vers le haut (42) sur une face extérieure du châssis de corps (16) afin d'accrocher des orifices récepteurs verticaux d'un placage distant sur les tourillons (42).

9. Kit selon une des revendications précédentes, **caractérisé en ce que**
le support extérieur (40) comporte un corps de base (41) ayant approximativement la forme d'un cube creux sans le couvercle et que le tourillon est en saillie orthogonalement vers l'extérieur depuis une paroi latérale du corps de base (41), le tourillon (42) ayant notamment une conformation massive, notamment légèrement conique, et s'effilant vers l'extérieur et
étant prévu dans la paroi latérale (41b) opposée au tourillon (42) du support extérieur (40) un orifice de passage (43") destiné à recevoir un tourillon (42) d'un support extérieur sous-jacent suivant (40).

10. Kit selon une des revendications précédentes, **caractérisé en ce que**
aussi bien un fond (41a), un orifice de passage (43) que les parois (41b) présentent des orifices de passage (43') ou (43"), dans les deux parois voisines du tourillon (42) du corps de base (41), des orifices de passage (43') opposés et alignés les uns par rapport aux autres étant pratiqués.

11. Kit selon une des revendications précédentes, **caractérisé en ce que**
le fond (41a) du corps de base (41) du support extérieur (40) comporte une proéminence (41c) de préférence quadratique, orientée vers l'extérieur, dont la longueur d'arête est légèrement inférieure à la largeur d'ouverture de la rainure en T (56, 56').

12. Kit selon une des revendications précédentes, **caractérisé en ce que**
les surfaces intérieures de la paroi latérale (8) et/ou de la paroi postérieure (11) du corps externe (22) comportent des surfaces de fixation percées de trous borgnes pour poser et visser un support extérieur (40) par son fond (41a) contre la paroi latérale (8) ou la paroi postérieure (11).

13. Kit selon une des revendications précédentes, **caractérisé par**
une barre de blocage (86) pour bloquer un module de toit (500) du corps externe (22) sur le châssis de corps (16) du corps interne (21) en glissant à travers les orifices de passage (43') deux supports extérieurs (40) disposés à la même hauteur et saillant vers l'extérieur depuis les surfaces latérales du châssis de corps (16) et de ses profilés d'arête (17) et en les glissant à travers des rallonges de blocage (501) du module de toit (500) qui sont en saillie depuis le module de toit (500) verticalement vers le bas entre le châssis de corps (16) et les parois latérales (8) du corps externe (22), les rallonges de blocage (501) comportant également des orifices de passage alignés sur les orifices de passage (43') des supports extérieurs (40).

14. Kit selon une des revendications précédentes, **caractérisé en ce que**
le module de toit (500) comporte un bord saillant à l'extérieur vers le bas (502) qui est positionné à l'extérieur à une distance telle qu'il s'emboîte sur l'arête supérieure des parois latérales (8) et de la paroi postérieure (11).

15. Kit selon une des revendications précédentes, **caractérisé en ce que**
le châssis de corps (16) en métal est un châssis cubique ayant des profilés d'arête (17) le long des arêtes extérieures du cube, du moins le long des arêtes extérieures des surfaces latérales du cube, notamment le long de toutes les arêtes extérieures du cube, notamment ayant des traverses supplémentaires (34) dans l'extension des surfaces extérieures du cube, les profilés d'arête (17) étant constitués par le premier profilé de châssis (51) et étant raccordés entre eux aux coins du cube par les premiers connecteurs cubiques (61) sur lesquels ils reposent et sont fixés par leurs faces frontales.

16. Kit selon une des revendications précédentes, **caractérisé en ce que**
le profilé d'insertion démontable (68) est réalisé sensiblement en forme de rainure avec une pièce d'insertion en forme de U ouverte vers l'extérieur (68a) et des bords (68c) saillant transversalement vers l'extérieur depuis ses extrémités libres, la pièce d'insertion en forme de U (68a) comportant, près de son extrémité ouverte, des rallonges saillant vers l'intérieur (68e) et la largeur extérieure de la pièce d'insertion (68a) étant notamment, à l'état non chargé, inférieure à la largeur d'ouverture de la rainure en T (56).

17. Kit selon une des revendications précédentes, **caractérisé par** un deuxième profilé de châssis (52),
le deuxième profilé de châssis (52) étant réalisé de manière analogue au premier profilé de châssis (51) mais avec des dimensions extérieures réduites par rapport à celui-ci, et un deuxième connecteur cubique (62),
le deuxième connecteur cubique (62) étant réalisé de manière analogue au premier connecteur cubique (61) mais avec une longueur d'arête inférieure ou égale à la largeur du deuxième profilé de châssis (52).

18. Kit selon une des revendications précédentes, **caractérisé en ce que**
au moins une partie de la section transversale extérieure de la pièce d'étanchéité (73a, 74a) est revêtue d'un revêtement conducteur électrique, de préférence métallique, notamment d'une toile métallique (75) qui s'étend sur au moins une face, dans le cas du premier joint combiné (73) notamment sur les deux face, jusqu'au niveau de la pièce d'insertion (73b, 74b) de sorte que, lors de l'insertion des joints dans une de ces rainures diagonales (55, 55'), la toile métallique (75) se met en contact avec le profilé de châssis (51, 52, 53).

19. Kit selon une des revendications précédentes, **caractérisé par**
un bouchon de retenue (77), notamment en matière plastique, à insérer et à verrouiller par rotation de 90° dans une des rainures en T (56) du premier ou du deuxième profilé de châssis (51 ou 52),
le bouchon de retenue (77) comportant une pièce de tête élargie (77a) destinée à s'emboîter sur et notamment à tenir le bord notamment d'un écran de tôle (13) ainsi qu'un écarteur (77b) en fonction de l'épaisseur de l'écran de tôle (13) et qu'une pièce d'insertion (c) de forme allongée vue du dessus à insérer de l'extérieur dans une des rainures en T (56, 56') et à verrouiller dedans par correspondance géométrique après une rotation d'environ 90°,
les extrémités extérieures de la pièce d'insertion étant arrondies en forme d'arc et la longueur de la pièce d'insertion étant légèrement supérieure à la largeur de la rainure en T (56 ou 56').

20. Kit selon une des revendications précédentes, **caractérisé par**
des becs rotatifs (64) à visser sur des écrans de tôle, comprenant au moins un bec proéminent latéralement (64a) à rentrer en tournant dans la rainure en T (56) du premier profilé de châssis (51), la distance en hauteur du bec (64a) par rapport à la surface de base du bec rotatif (64) équivalant notamment à la distance entre l'arête extérieure du profilé (51, 52, 53) et sa rainure en T (56, 56') et
la partie inférieure du bec (64) présentant notamment une circonférence extérieure à six pans correspondant à une tête de vis à six pans et le bec rotatif (64) présentant notamment un alésage de passage à zone élargie sur la face supérieure pour y planter une vis de fixation par exemple vis-à-vis de l'écran de tôle (13).

21. Procédé de fabrication d'armoires de distribution comportant un corps interne (21) sous forme d'un châssis de corps (16) en métal et un corps externe sous forme d'un placage distant et au moins une porte (4) en matière plastique, **caractérisé en ce que**
un châssis de corps (16), au moins sous la forme de deux pièces latérales de châssis reliées l'une à l'autre, notamment sous la forme d'un châssis quadrangulaire, fait de profilés de châssis sectionnés (51, 52, 53), est établi le long des arêtes au moyen de connecteurs cubiques (61, 62) qui sont vissés aux profilés de châssis sectionnés de manière adaptée (51, 52, 53),
sur le corps interne (21), le placage distant du corps externe (22) sous la forme de parois latérales (8) et d'au moins une paroi postérieure (11) est fixé en l'accrochant depuis le haut et
la porte (4) est articulée sur les arêtes antérieures des parois latérales (8) du corps externe (22),
le corps interne (21) étant, avant l'application du placage distant, fermé du moins partiellement de manière étanche aux ondes électromagnétiques (13) par un placage extérieur sous forme d'écrans de tôle en posant des écrans de tôle (13) sur la surface extérieure du châssis de corps (16) et en les y fixant au moyen de profilés d'insertion (68, 69) fichés dans des rainures en T (56, 56') des profilés de châssis (51-53) et emboîtés sur le bord des écrans de tôle (13).

22. Procédé selon la revendication 21, **caractérisé en ce que**,
dans le cas d'un corps externe en plusieurs pièces (22), son placage distant est réalisé en posant un module de toit (500) sur le corps interne (21) et en l'emboîtant sur le bord supérieur de la paroi postérieure (11) et les parois latérales (8) et la pacage distant est bloqué par raccordement en correspondance géométrique du module de toit au corps interne,
le blocage ayant lieu en glissant horizontalement respectivement une barre de blocage (86), la porte frontale étant ouverte ou enlevée, dans l'intervalle entre le corps interne (21) et le corps externe (22) à travers des orifices aussi bien du module de toit (500) que du corps interne (21).

23. Procédé selon la revendication 21 ou 22, **caractérisé en ce que**,
avant la fixation des écrans de tôle (13), on insère un deuxième joint combiné (74) dans les rainures diagonales (55, 55') des profilés (51-53) au niveau des écrans de tôle et en périphérie de ceux-ci de sorte que les écrans de tôle (13) reposent également sur ces deuxièmes joints combinés (74).

24. Procédé selon une des revendications 21 à 23, **caractérisé en ce que**
un écran de tôle (13) permettant de fermer le fond est équipé de becs de retenue (64) sur sa face supérieure à distance à l'intérieur du châssis de corps (16) et que l'écran de tôle (13) est soulevé par le bas contre les profilés périphériques horizontaux (51-53) à l'aide des becs rotatifs et raccordé en correspondance géométrique, par rotation des becs rotatifs, au châssis de profilé (16) du fait que les becs (64a) des becs rotatifs (64) s'engrènent par correspondance géométrique dans la rainure en T dirigée vers l'intérieur (56, 56').

25. Procédé selon une des revendications 21 à 24, **caractérisé en ce que**
l'accrochage des parois latérales (8) et de la paroi postérieure (11) est assuré par vissage de quatre supports extérieurs (40) comportant des tourillons dirigés vers le haut (42) aux faces intérieures de la paroi postérieure ou de la paroi latérale, au niveau de leurs coins, et accrochage par l'orifice de passage inférieur (43"') de ces supports extérieurs (40) sur le tourillon dirigé vers le haut de supports extérieurs identiques respectifs (40) placés en dessous, qui sont fixés sur les surfaces extérieures du châssis de profilé (16) du corps interne (21) à une position correspondante.
